# FASCICULE DE BREVET EUROPEEN

(11) **EP 3 959 449 B1**
(45) Date de publication et mention de la délivrance du brevet: **23.08.2023**
(21) Numéro de dépôt: 20726221.3
(22) Date de dépôt: 16.03.2020
(51) Int. Cl.: F16D 7/04, A01D 34/68, F16D 11/14, F16D 41/18, F16H 37/08

(54) **BOÎTIER DE TRANSMISSION ET ENGIN ROULANT ÉQUIPÉ D'UN TEL BOÎTIER DE TRANSMISSION**
GETRIEBEKASTEN UND MOTOR MIT EINEM SOLCHEN GETRIEBEKASTEN
TRANSMISSION BOX AND ENGINE EQUIPPED WITH SUCH A TRANSMISSION BOX

(30) Priorité: 24.04.2019 FR 1904288
(43) Date de publication de la demande: 02.03.2022
(73) Titulaire: France Reducteurs, 85500 Les Herbiers (FR)
(72) Inventeur: GUIROULT, Fabien, 85480 SAINT HILAIRE LE VOUHIS (FR)
(74) Mandataire: Ipsilon
(86) Numéro de dépôt international: PCT/FR2020/050570
(87) Numéro de publication internationale: WO 2020/217016

(56) Documents cités:
- WO-A1-2014/174173
- FR-A1- 2 946 290
- FR-A1- 2 946 405

## Description

La présente invention concerne un boîtier de transmission, ainsi qu'un engin roulant équipé d'un tel boîtier de transmission.

Elle concerne plus particulièrement un boîtier de transmission comprenant logés au moins partiellement à l'intérieur dudit boîtier, un arbre dit de sortie réalisé d'un seul tenant ou en au moins deux sections d'arbre coaxiales montées libres à rotation l'une par rapport à l'autre, un organe rotatif moteur monté libre à rotation sur ledit arbre, un système d'entraînement en rotation dudit organe rotatif moteur suivant un premier sens d'entraînement en rotation dit marche avant et suivant un deuxième sens d'entraînement en rotation dit marche arrière et, disposé entre l'arbre ou chacune des sections d'arbre et l'organe rotatif moteur, un mécanisme d'embrayage, le ou chaque mécanisme d'embrayage présentant un état débrayé et un état embrayé, l'arbre ou chaque section d'arbre étant, à l'état débrayé du mécanisme d'embrayage correspondant, libre de tourner dans l'un quelconque de ses sens de rotation, le ou chaque mécanisme d'embrayage dit automatique étant configuré pour, à l'état entraîné en rotation de l'organe rotatif moteur suivant le premier sens d'entraînement en rotation dit marche avant, passer de l'état débrayé à l'état embrayé lorsque la vitesse de rotation dudit organe rotatif moteur tournant est supérieure à celle de l'arbre ou de ladite section d'arbre avec lequel le mécanisme d'embrayage est apte à coopérer, et de l'état embrayé à l'état débrayé par l'entraînement en rotation en marche avant de l'arbre ou de la section d'arbre avec lequel le mécanisme d'embrayage coopère, lorsque la vitesse de rotation de l'arbre ou de ladite section d'arbre est supérieure à la vitesse de rotation de l'organe rotatif moteur.

Un tel boîtier de transmission intègre un embrayage dit automatique qui ne nécessite pas, pour son fonctionnement, un organe de commande dédié, tel qu'une fourchette, comme cela est le cas dans des embrayages traditionnels.

Dans un tel boîtier de transmission, tel qu'illustré dans le brevet FR 2 885 655, lors de l'entraînement en rotation dans un sens dit en marche avant de l'organe rotatif moteur, tel qu'une roue dentée, le mécanisme d'embrayage est désactivé lorsque la vitesse de rotation de l'arbre, qui est généralement l'arbre d'entraînement des roues de l'engin, est supérieure à la vitesse de rotation de la roue dentée motrice. Cette caractéristique permet généralement, en raison de l'inertie de l'engin, une désactivation automatique du ou des mécanismes d'embrayage, lors de l'arrêt de l'engin. En effet, lorsque l'engin est arrêté, la roue dentée motrice arrête de tourner et l'arbre ou les sections d'arbre d'entraînement de roue de l'engin entraînés par l'inertie de l'engin, assurent la désactivation du mécanisme d'embrayage, permettant ensuite un déplacement aisé au sol en marche avant ou en marche arrière, de l'engin. Les engins roulants se perfectionnant, on est à la recherche de boîtier de transmission plus performant,

Un autre exemple de boîte de transmission peut être trouvé dans WO 2014/174173 A1.

Un but de l'invention est de proposer un boîtier transmission dont la conception permet des performances accrues sans nuire à la compacité et à la simplicité du boîtier.

À cet effet, l'invention a pour objet un boîtier de transmission comprenant logés au moins partiellement à l'intérieur dudit boîtier, un arbre dit de sortie réalisé d'un seul tenant ou en au moins deux sections d'arbre coaxiales, un organe rotatif dit moteur monté libre à rotation sur ledit arbre, un système d'entraînement en rotation dudit organe rotatif moteur suivant un premier sens d'entraînement en rotation dit marche avant et suivant un deuxième sens d'entraînement en rotation dit marche arrière et, disposé entre l'arbre ou chacune des sections d'arbre et l'organe rotatif moteur, un mécanisme d'embrayage, le ou chaque mécanisme d'embrayage logé à l'intérieur du boîtier présentant un état débrayé et un état embrayé, l'arbre ou chaque section d'arbre étant, à l'état débrayé du mécanisme d'embrayage correspondant, libre de tourner dans l'un quelconque de ses sens de rotation, le ou chaque mécanisme d'embrayage dit automatique étant configuré pour, à l'état entraîné en rotation de l'organe rotatif moteur suivant le premier sens d'entraînement en rotation dit marche avant, passer de l'état débrayé à l'état embrayé lorsque la vitesse de rotation dudit organe rotatif moteur est supérieure à celle de l'arbre ou de ladite section d'arbre avec lequel le mécanisme d'embrayage est apte à coopérer, et de l'état embrayé à l'état débrayé par l'entraînement en rotation en marche avant de l'arbre ou de la section d'arbre avec lequel le mécanisme d'embrayage coopère, lorsque la vitesse de rotation de l'arbre ou de ladite section d'arbre est supérieure à la vitesse de rotation de l'organe rotatif moteur, caractérisé en ce que le ou chaque mécanisme d'embrayage dit automatique est un mécanisme d'embrayage à deux sens de fonctionnement et est en outre configuré pour, à l'état entraîné en rotation de l'organe rotatif moteur suivant le deuxième sens d'entraînement en rotation dit marche arrière, passer de l'état débrayé à l'état embrayé lorsque la vitesse de rotation dudit organe rotatif moteur est supérieure à celle de l'arbre ou de ladite section d'arbre avec lequel le mécanisme d'embrayage est apte à coopérer, et de l'état embrayé à l'état débrayé par l'entraînement en rotation en marche arrière de l'arbre ou de la section d'arbre avec lequel le mécanisme d'embrayage coopère, lorsque la vitesse de rotation de l'arbre ou de ladite section d'arbre est supérieure à la vitesse de rotation de l'organe rotatif moteur.

La réalisation d'un mécanisme d'embrayage automatique à deux sens de fonctionnement, c'est-à-dire marche avant et marche arrière, permet d'équiper le boîtier de transmission d'un système d'entraînement en rotation en marche avant et en marche arrière de l'organe rotatif moteur sans nuire à la simplicité de fonctionnement et de réalisation dudit boîtier de transmission.

Selon un mode de réalisation de l'invention, le ou au moins l'un des mécanismes d'embrayage comprend une pièce mobile sur l'arbre ou la section d'arbre entre une position débrayée et une position embrayée, ladite pièce entraînable en rotation par l'organe rotatif moteur étant configurée pour passer de la position embrayée correspondant à l'état embrayé du mécanisme d'embrayage à la position débrayée correspondant à l'état débrayé du mécanisme d'embrayage par contact d'appui avec l'organe rotatif moteur. Cette conception permet de conserver une architecture et un fonctionnement particulièrement simples du mécanisme d'embrayage sans nécessiter la présence de pièce à usure rapide, tel qu'un ressort, notamment pour le rappel en position débrayée. La pièce mobile entraînable en rotation par l'organe rotatif moteur est donc configurée pour passer de la position embrayée à la position débrayée par déplacement axial le long de l'arbre ou de la section d'arbre portant ledit mécanisme d'embrayage. Ce déplacement axial peut s'opérer par simple contact d'appui de la pièce mobile avec l'organe rotatif moteur.

Selon un mode de réalisation de l'invention, la pièce mobile du mécanisme d'embrayage est configurée pour passer de la position débrayée à la position embrayée par contact d'appui avec l'organe rotatif moteur. A nouveau, cette conception permet de conserver une architecture et un fonctionnement particulièrement simples du mécanisme d'embrayage sans nécessiter la présence de pièce à usure rapide, tel qu'un ressort, notamment pour le passage en position embrayée.

Selon un mode de réalisation de l'invention, la pièce mobile du mécanisme d'embrayage est une pièce disposée entre une pièce dite crabot fixe montée solidaire en rotation de l'arbre ou de la section d'arbre associée au mécanisme d'embrayage et une partie de l'organe rotatif moteur, cette pièce mobile du mécanisme d'embrayage étant une pièce mobile axialement sur ledit arbre ou ladite section d'arbre entre une position rapprochée dudit crabot fixe correspondant à l'état embrayé du mécanisme d'embrayage et une position écartée du crabot fixe correspondant à l'état débrayé du mécanisme d'embrayage.

Selon un mode de réalisation de l'invention, la pièce mobile du mécanisme d'embrayage est une pièce freinée de manière permanente par un frein à action permanente sur la vitesse angulaire de ladite pièce mobile. De préférence, le frein est monté fixe en rotation à l'intérieur du boîtier.

Selon un mode de réalisation de l'invention, la pièce mobile du mécanisme d'embrayage est un plateau évidé et le plateau et le crabot fixe sont respectivement équipés de dents pour une solidarisation en rotation du plateau et du crabot fixe à l'état rapproché du plateau du crabot fixe.

Selon un mode de réalisation de l'invention, la pièce mobile du mécanisme d'embrayage est un plateau équipé de rampes configurées pour coopérer par contact d'appui avec des rampes complémentaires ménagées sur l'organe rotatif moteur pour un déplacement axial du plateau dans le sens d'un rapprochement ou d'un écartement du crabot fixe solidaire en rotation de l'arbre ou de la section d'arbre associée au mécanisme d'embrayage.

Selon un mode de réalisation de l'invention, les rampes du plateau et de l'organe rotatif moteur sont chacune organisées en une première et une deuxième série de rampes, avec les rampes de l'une des séries actives en marche avant et les rampes de l'autre série actives en marche arrière, ces rampes de chaque série de rampes comprenant une pluralité d'ensembles de rampes, chaque ensemble de rampes ou d'une série de rampes de l'organe rotatif moteur comprenant au moins deux rampes, ces rampes de l'organe rotatif moteur coopérant l'une, avec l'une des rampes d'un ensemble de rampes d'une série de rampes du plateau pour un déplacement axial du plateau dans le sens d'un rapprochement du crabot fixe correspondant à la position embrayée, l'autre, avec l'autre des rampes dudit ensemble de rampes d'une série de rampes du plateau pour un déplacement axial du plateau dans le sens d'un écartement du crabot fixe correspondant à la position débrayée.

Selon un mode de réalisation de l'invention, les rampes d'un ensemble de rampes de la première série de rampes du plateau forment avec les rampes d'un ensemble de rampes de la deuxième série de rampes du plateau un losange, ces rampes étant de préférence des rampes hélicoïdales avec un pas d'hélice identique.

Selon un mode de réalisation de l'invention, la pièce mobile du ou de l'un des mécanismes d'embrayage et l'organe rotatif moteur sont pour l'entraînement en rotation de la pièce mobile par l'organe rotatif moteur munis chacun de dents, chaque dent de la pièce mobile étant montée avec jeu dans l'espace entre deux dents de l'organe rotatif moteur.

Selon un mode de réalisation de l'invention, le ou chaque mécanisme d'embrayage comprend, deux crabots dits mobiles l'un, marche avant, l'autre, marche arrière, portés par l'organe rotatif moteur, un élément de crabot dit fixe solidaire en rotation de l'arbre ou de la section d'arbre portant ledit mécanisme d'embrayage et un pilote de crabotage, ledit pilote de crabotage monté, de manière coaxiale et libre à rotation sur l'arbre ou la section d'arbre qui le porte, étant une pièce freinée de manière permanente par un frein à action permanente sur la vitesse angulaire dudit pilote de crabotage, ce pilote de crabotage étant équipé d'un chemin de guidage des crabots mobiles pour permettre sélectivement le passage de chaque crabot mobile d'un état débrayé à un état embrayé en prise avec l'élément de crabot dit fixe, ledit chemin de guidage du pilote de crabotage étant configuré pour permettre le passage du crabot mobile marche avant à l'état embrayé, à l'état entraîné en rotation de l'organe rotatif moteur suivant le premier sens d'entraînement en rotation dit marche avant, lorsque la vitesse de rotation dudit organe rotatif moteur est supérieure à celle de l'arbre ou de ladite section d'arbre avec lequel le mécanisme d'embrayage est apte à coopérer, et le passage du crabot mobile marche arrière à l'état embrayé, à l'état entraîné en rotation de l'organe rotatif moteur suivant le deuxième sens d'entraînement en rotation dit marche arrière, lorsque la vitesse de rotation dudit organe rotatif moteur est supérieure à celle de l'arbre ou de ladite section d'arbre avec lequel le mécanisme d'embrayage est apte à coopérer, l'élément de crabot fixe formant une came de décrabotage du crabot mobile marche avant à l'état entraîné en rotation en marche avant de l'arbre ou de la section d'arbre avec lequel le mécanisme d'embrayage coopère, lorsque la vitesse de rotation de l'arbre ou de ladite section d'arbre est supérieure à la vitesse de rotation de l'organe rotatif moteur, et une came de décrabotage du crabot mobile marche arrière à l'état entraîné en rotation en marche arrière de l'arbre ou de la section d'arbre avec lequel le mécanisme d'embrayage coopère, lorsque la vitesse de rotation de l'arbre ou de ladite section d'arbre est supérieure à la vitesse de rotation de l'organe rotatif moteur.. Cette conception permet de conserver une architecture et un fonctionnement particulièrement simples du mécanisme d'embrayage sans nécessiter la présence de pièce à usure rapide, tel qu'un ressort, notamment pour le rappel en position débrayée.

Selon un mode de réalisation de l'invention, chaque crabot mobile affecte la forme d'un levier pivotant monté mobile à pivotement autour d'un axe parallèle à l'arbre ou aux sections d'arbre pour le passage dudit crabot mobile d'un état débrayé à un état embrayé ou inversement.

Selon un mode de réalisation de l'invention, ledit levier pivotant est muni d'un doigt disposé le long ou à l'intérieur du chemin de guidage du pilote de crabotage, ce doigt étant positionnable en contact d'appui avec l'élément de crabot fixe.

Selon un mode de réalisation de l'invention, l'élément de crabot fixe affecte la forme d'une bague montée solidaire en rotation de l'arbre ou de la section d'arbre qui la porte, ladite bague étant munie d'au moins deux saillies radiales externes, l'une ou l'autre desdites saillies radiales externes formant une butée d'appui de l'un des crabots mobiles à l'état embrayé du mécanisme d'embrayage, au moins une partie de la surface périphérique externe de la bague ménagée entre lesdites saillies radiales externes étant configurée pour former la partie formant came de décrabotage dudit élément de crabot fixe.

Selon un mode de réalisation de l'invention, le pilote de crabotage affecte la forme d'une pièce rotative de type plateau traversée par l'arbre ou la section d'arbre qui le porte, cette pièce rotative étant munie d'au moins une lumière traversante formant le chemin de guidage dudit pilote de crabotage.

L'invention a encore pour objet un engin automoteur roulant à conducteur, de préférence marchant, tel que tondeuse à gazon, comprenant un arbre primaire moteur, des roues et un boîtier de transmission positionnable entre l'arbre primaire moteur et les roues de l'engin, caractérisé en ce que le boîtier de transmission est conforme à celui décrit ci-dessus.

### Brève description des dessins

L'invention sera bien comprise à la lecture de la description suivante d'exemples de réalisation, en référence aux dessins annexés dans lesquels :
[Fig. 1] représente une vue d'ensemble d'un engin roulant équipé d'un boîtier de transmission conforme à l'invention.
[Fig. 2] représente une vue en perspective des éléments logés au moins partiellement à l'intérieur d'un boîtier de transmission conforme à l'invention, le boîtier lui-même ayant été omis.
[Fig. 3] représente une vue en position éclatée des éléments portés par l'arbre de sortie d'entraînement des roues d'un boîtier de transmission conforme à l'invention.
[Fig. 4] représente une vue partielle en position éclatée d'éléments aptes à être portés par l'arbre de sortie d'entraînement des roues de l'engin d'un boîtier de transmission conforme à l'invention.
[Fig. 5] représente une vue partielle en perspective de l'organe rotatif moteur et de la pièce mobile d'un mécanisme d'embrayage conforme à l'invention.
[Fig. 6A] illustre sous forme de vues en coupe et partiellement en perspective un mécanisme d'embrayage à l'état débrayé.
[Fig. 6B] illustre sous forme de vues en coupe et partiellement en perspective un mécanisme d'embrayage lors de son passage de l'état débrayé à l'état embrayé.
[Fig. 6C] illustre sous forme de vues en coupe et partiellement en perspective un mécanisme d'embrayage à l'état embrayé.
[Fig. 7A] illustre sous forme de vues en coupe et partiellement en perspective le passage d'un mécanisme d'embrayage de l'état embrayé à l'état débrayé.
[Fig. 7B] illustre sous forme de vues en coupe et partiellement en perspective le passage d'un mécanisme d'embrayage en cours de débrayage.
[Fig. 7C] illustre sous forme de vues en coupe et partiellement en perspective le mécanisme d'embrayage de l'état débrayé.
[Fig. 8] représente une vue en perspective des éléments d'un boîtier à l'état non assemblé, le boîtier lui-même ayant été omis.
[Fig. 9] représente une vue partielle en perspective en position éclatée des éléments d'un mécanisme d'embrayage et de l'organe rotatif moteur.
[Fig. 10] représente une vue partielle de face d'un mécanisme d'embrayage associé à l'organe rotatif moteur et au dispositif d'entraînement en rotation dudit organe rotatif moteur, à l'état entraîné en marche avant dudit organe rotatif moteur.
[Fig. 11] représente une vue partielle de face d'un mécanisme d'embrayage associé à l'organe rotatif moteur et au dispositif d'entraînement en rotation dudit organe rotatif moteur, à l'état entraîné en marche arrière dudit organe rotatif moteur.
[Fig. 12] représente une vue en coupe partielle des éléments logés au moins partiellement à l'intérieur d'un boîtier de transmission conforme à l'invention, le boîtier ayant été omis.
[Fig. 13A] illustre sous forme de vues de face avec pilote de crabotage (vue de gauche) et sans pilote de crabotage (vue de droite) un mécanisme d'embrayage à l'état entraîné en marche avant de l'organe rotatif moteur et à l'état débrayé dudit mécanisme d'embrayage.
[Fig. 13B] illustre sous forme de vues de face avec pilote de crabotage (vue de gauche) et sans pilote de crabotage (vue de droite) un mécanisme d'embrayage, ledit mécanisme d'embrayage étant en cours d'embrayage du crabot marche avant.
[Fig. 13C] illustre sous forme de vues de face avec pilote de crabotage (vue de gauche) et sans pilote de crabotage (vue de droite) un mécanisme d'embrayage à l'état entraîné en marche avant de l'organe rotatif moteur et à l'état embrayé du crabot marche avant du mécanisme d'embrayage.
[Fig. 13D] illustre sous forme de vues de face avec pilote de crabotage (vue de gauche) et sans pilote de crabotage (vue de droite) un mécanisme d'embrayage à l'état entraîné en marche avant de l'organe rotatif moteur, ledit mécanisme d'embrayage étant en cours de débrayage.
[Fig. 13E] illustre sous forme de vues de face avec pilote de crabotage (vue de gauche) et sans pilote de crabotage (vue de droite) un mécanisme d'embrayage à l'état entraîné en marche arrière de l'organe rotatif moteur et à l'état embrayé du crabot marche arrière du mécanisme d'embrayage.
[Fig. 14] représente une autre vue en perspective d'un engin roulant conforme à l'invention.

Comme mentionné ci-dessus, l'invention a pour objet un boîtier 1 de transmission, plus particulièrement destiné à s'appliquer à un engin 20 roulant, notamment à conducteur marchant.

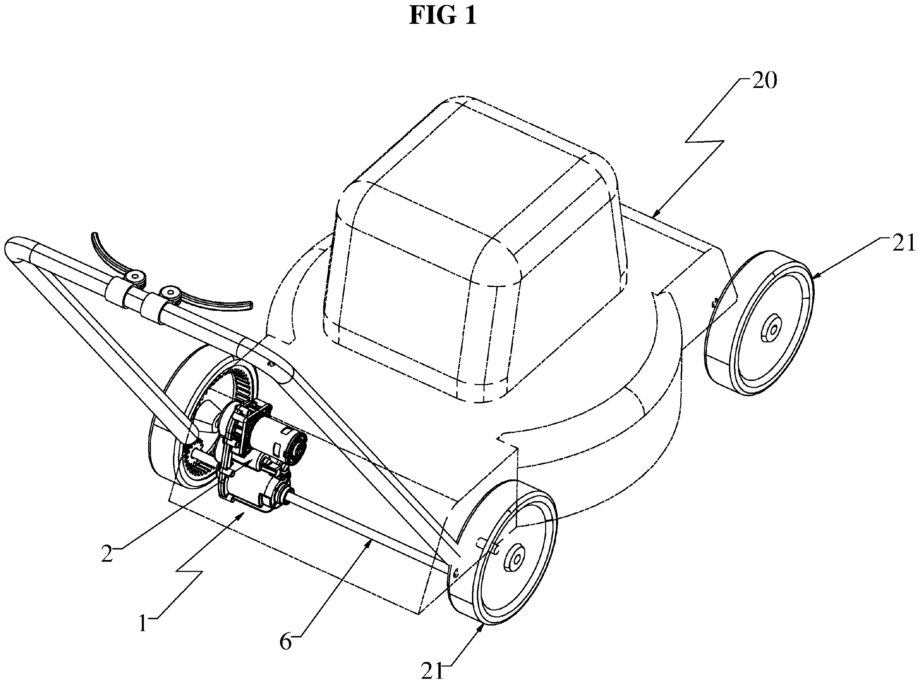

La figure 1 représente l'application d'un tel boîtier 1 de transmission à une tondeuse à gazon. Cette tondeuse à gazon comporte un châssis roulant, les roues arrière du châssis étant représentées en 21 aux figures.

Le boîtier 1 de transmission a ici pour objet de transmettre un mouvement de rotation aux roues 21 arrière dudit engin. Le boîtier de transmission comprend donc un arbre 6, dit de sortie, réalisé d'un seul tenant ou en au moins deux sections 6A, 6B d'arbre coaxiales, montées libres à rotation l'une par rapport à l'autre. L'arbre 6 ou les sections 6A,6B d'arbre forment ici l'arbre d'entraînement des roues 21 d'une même paire de roues de l'engin de manière directe ou via une réduction. Cet arbre 6 ou les sections d'arbre 6A, 6B traversent le boîtier 1 et font saillie de ce dernier.

Un organe 5 rotatif du moteur est monté libre à rotation sur l'arbre 6. Cet organe 5 rotatif est, dans les exemples représentés, une roue dentée traversée par l'arbre 6.

Le boîtier 1 de transmission comprend encore un système 2 d'entraînement en rotation de cet organe 5 rotatif moteur. Ce système 2 d'entraînement en rotation est configuré pour entraîner en rotation l'organe 5 rotatif moteur suivant un premier sens d'entraînement en rotation dit marche avant et suivant un deuxième sens d'entraînement en rotation opposé dit marche arrière. Ce système 2 d'entraînement en rotation peut affecter un grand nombre de formes.

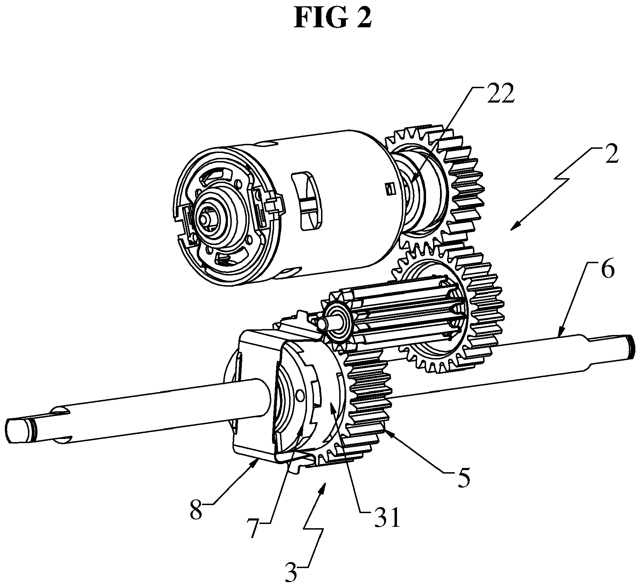

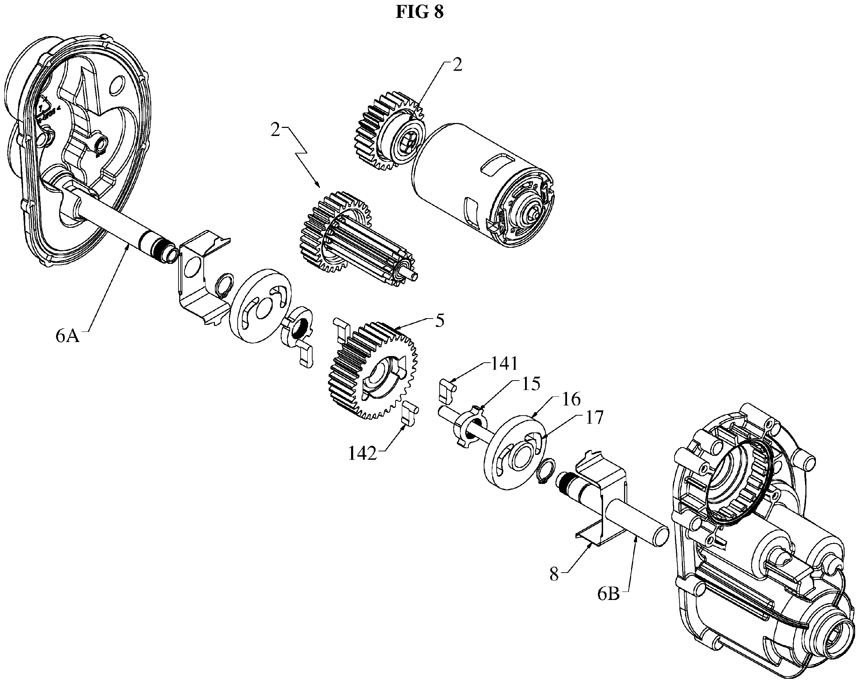

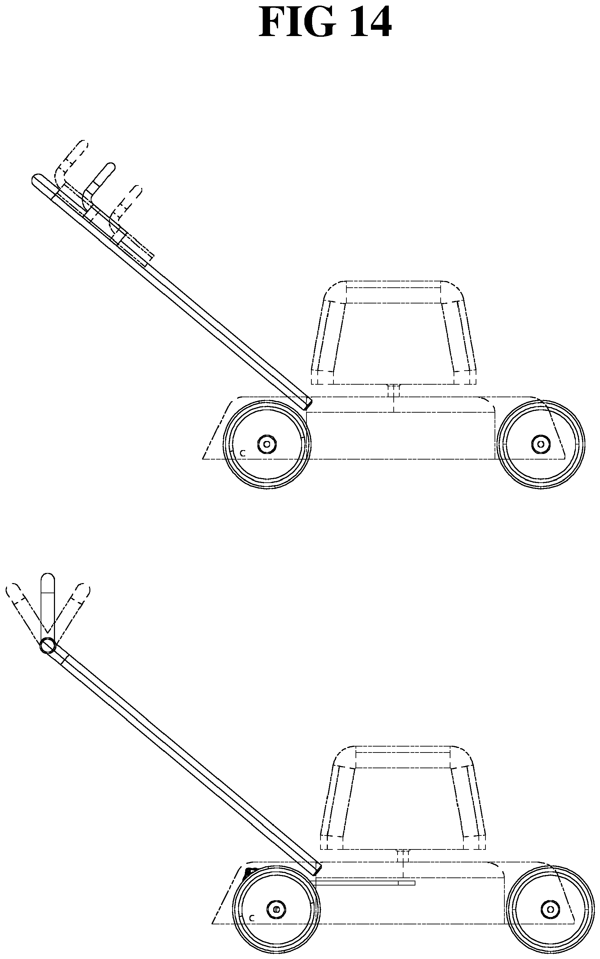

Dans les exemples représentés aux figures 2 et 8, ce système 2 d'entraînement en rotation comprend un moteur électrique à deux sens de rotation et des pignons de transmission du mouvement de rotation de l'arbre 22 moteur à l'organe 5 rotatif moteur. Ce moteur électrique peut être commandé en rotation à l'aide d'un levier pivotant unique placé sur le guidon de l'engin ou à l'aide d'un manchon coulissant comme l'illustre la figure 14 ou à l'aide de deux manettes comme illustré à la figure 1.

Un mécanisme 3 ou 4 d'embrayage est disposé à l'intérieur du boîtier 1 de transmission entre l'arbre 6 ou chacune des sections 6A, 6B d'arbre et la roue 5 motrice formant l'organe 5 rotatif moteur.

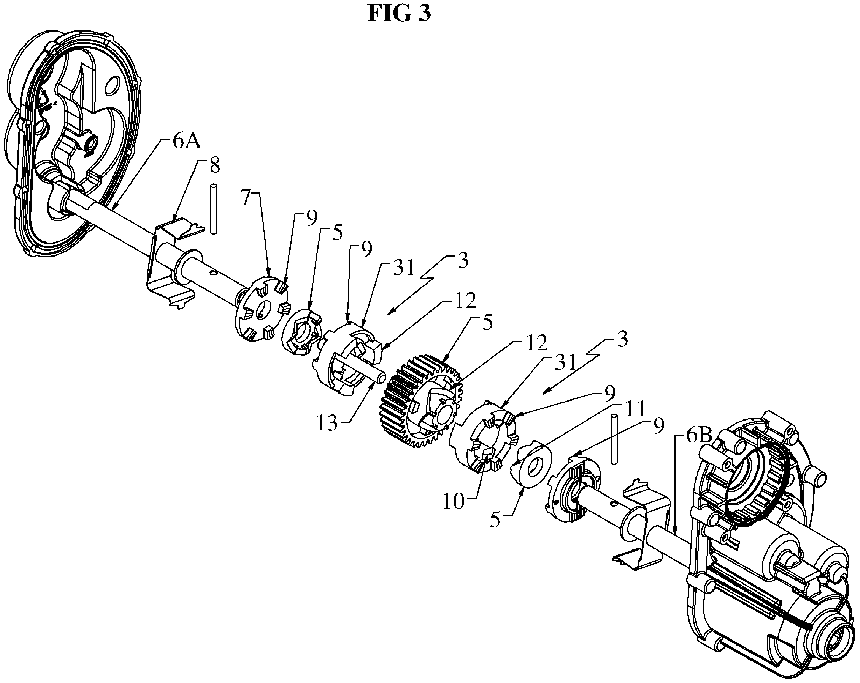

Dans l'exemple de la figure 3, l'arbre 6 est réalisé en deux sections 6A, 6B d'arbre coaxiales, reliées par un élément 13 de liaison sur lequel lesdites sections d'arbre sont montées libres à rotation pour pouvoir, à l'état aligné, être animées d'un déplacement relatif en rotation. Dans ce cas, la transmission comporte deux mécanismes 3 ou 4 d'embrayage, disposés chacun entre l'organe 5 rotatif moteur, et une section 6A, 6B d'arbre d'entraînement de roue. Ces mécanismes 3 ou 4 d'embrayage sont aptes à transmettre, l'un, la transmission du mouvement de l'organe 5 rotatif moteur à la section 6A d'arbre d'entraînement de roue, l'autre, la transmission du mouvement de l'organe 5 rotatif moteur à la section 6B d'arbre d'entraînement de roue. Ainsi, l'organe 5 rotatif moteur, disposé coaxial aux sections d'arbre d'entraînement de roue, est disposé entre deux mécanismes d'embrayage, chaque mécanisme 3 ou 4 d'embrayage étant porté au moins partiellement par une section d'arbre de roue d'une même paire de roues de l'engin.

Dans l'exemple représenté à la figure 2, l'arbre 6 est réalisé d'un seul tenant et ne porte qu'un seul mécanisme d'embrayage. La conception et le fonctionnement des mécanismes d'embrayage entre les figures 2 et 3, sont identiques.

La présence de deux sections d'arbre permet d'intégrer une fonction de différentiel dans le boîtier de transmission, sans nuire au fonctionnement de l'ensemble.

Chaque mécanisme d'embrayage comprend, indépendamment de sa conception, un état embrayé et un état débrayé. L'arbre 6 ou chaque section d'arbre 6A, 6B est, à l'état débrayé du mécanisme d'embrayage associé, libre de tourner dans l'un quelconque de ses sens de rotation. Chaque mécanisme d'embrayage est un mécanisme d'embrayage à deux sens de fonctionnement, c'est-à-dire est configuré pour passer de l'état débrayé à l'état embrayé par entraînement de l'organe 5 rotatif moteur suivant un premier sens d'entraînement en rotation dit marche avant et, par entraînement de l'organe 5 rotatif moteur suivant un deuxième sens d'entraînement en rotation dit marche arrière opposé au premier sens d'entraînement en rotation. Cet embrayage est susceptible de s'opérer lorsque la vitesse de rotation de l'organe 5 rotatif moteur est supérieure à celle de l'arbre ou de la section d'arbre portant ledit mécanisme.

De la même manière, chaque mécanisme d'embrayage est susceptible de passer automatiquement de l'état embrayé à l'état débrayé, à la fois en marche avant et en marche arrière, c'est-à-dire à l'état entraîné en rotation de l'organe 5 rotatif moteur en marche avant lorsque la vitesse de rotation de l'arbre 6 ou de la section d'arbre portant le mécanisme d'embrayage, et entraîné en rotation en marche avant, est supérieure à la vitesse de rotation de l'organe 5 rotatif moteur, et à l'état entraîné en rotation de l'organe 5 rotatif moteur en marche arrière lorsque, à nouveau, la vitesse de rotation de l'arbre 6 ou de la section d'arbre portant le mécanisme d'embrayage, et entraîné en rotation en marche arrière, est supérieure à la vitesse de rotation de l'organe 5 rotatif moteur.

Des exemples de réalisation d'un tel mécanisme d'embrayage sont décrits ci-après.

Un tel mécanisme d'embrayage se caractérise notamment, en dépit de ses nombreuses fonctionnalités, par l'absence d'un ressort à titre de moyen de rappel à l'état débrayé. Le passage de l'état embrayé à l'état débrayé est donc réalisé en l'absence d'organe élastique de rappel, mais uniquement par contact d'appui des pièces entre elles.

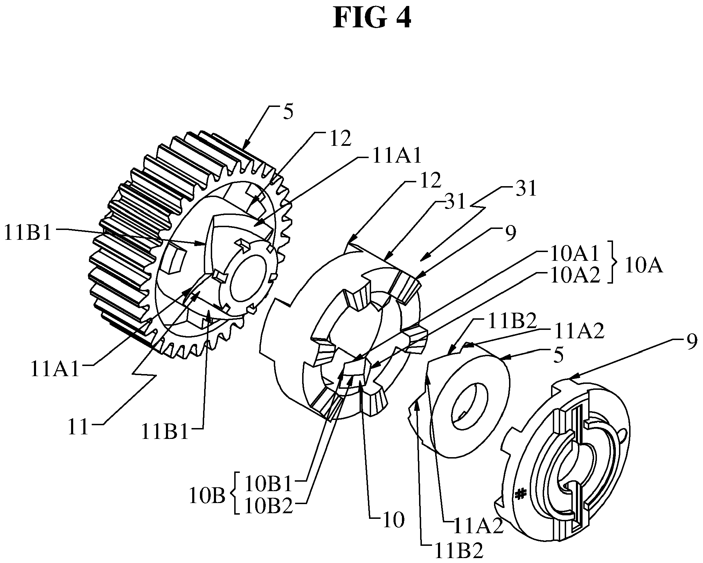

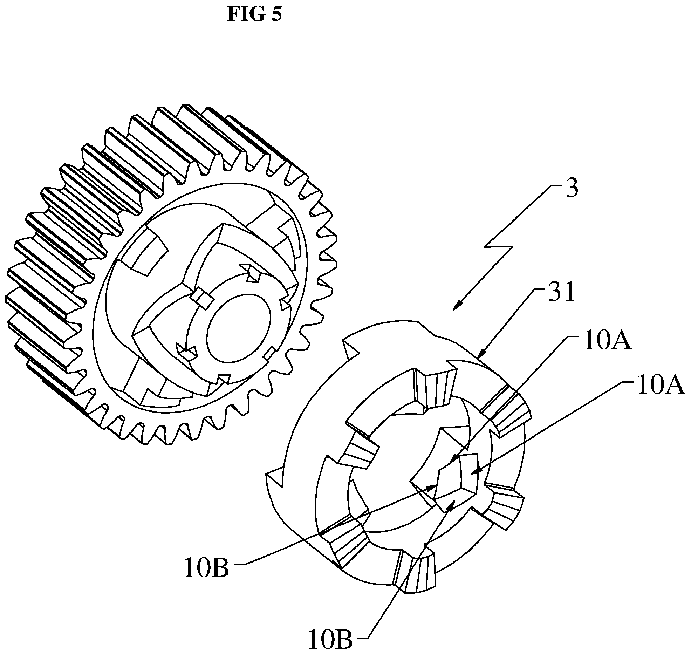

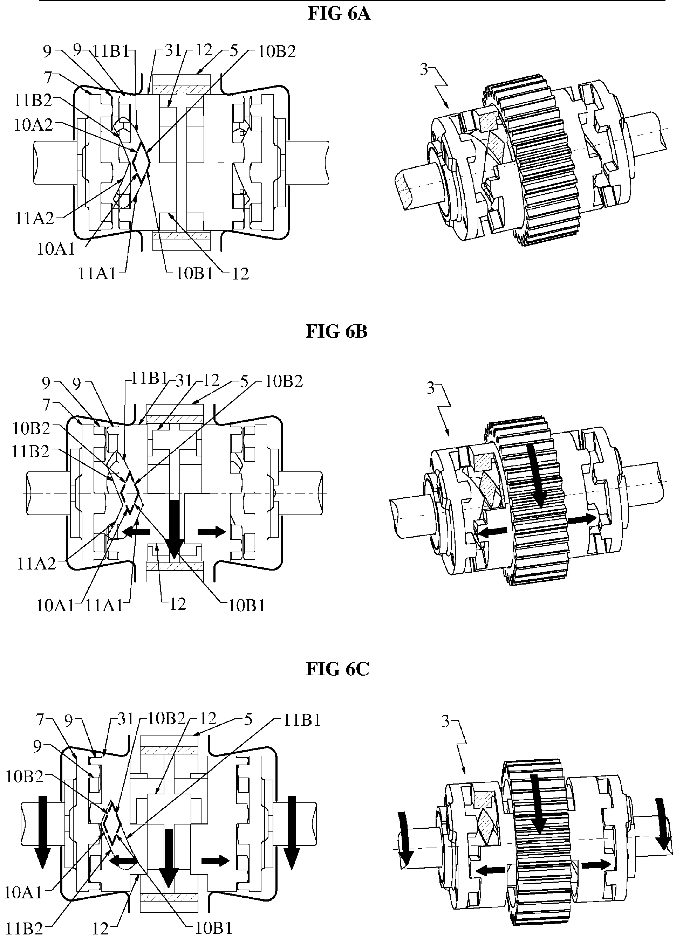

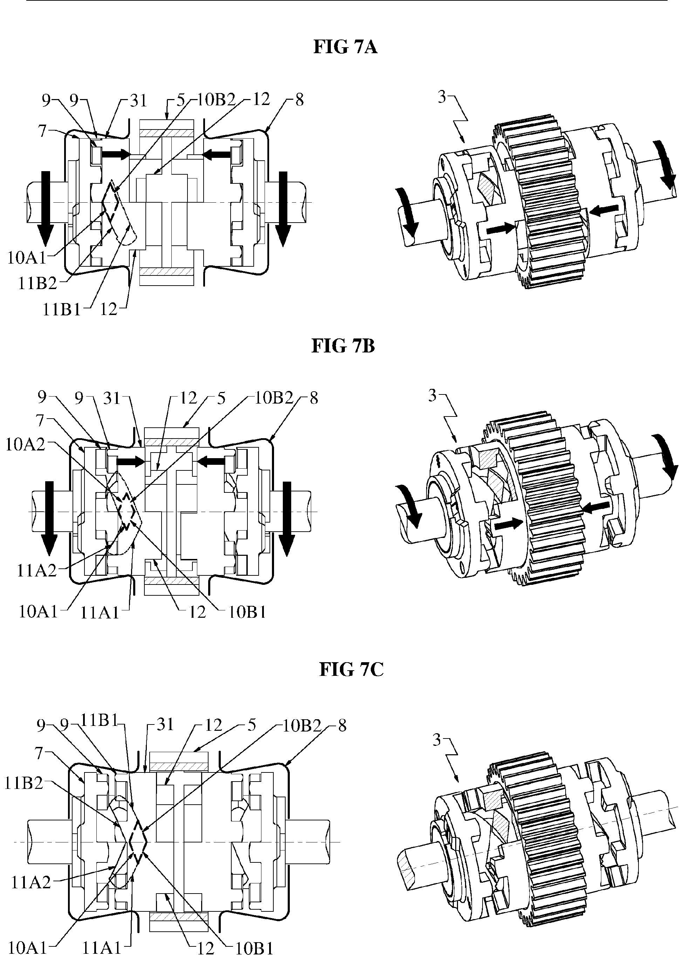

Dans l'exemple représenté aux figures 2 à 7C, chaque mécanisme d'embrayage représenté et désigné sous la référence générale 3 comprend une pièce 31 mobile, déplaçable axialement sur l'arbre ou la section d'arbre qui la porte, entre une position correspondant à l'état débrayé du mécanisme d'embrayage et une position embrayée correspondant à l'état embrayé du mécanisme d'embrayage, par contact d'appui avec l'organe 5 rotatif moteur.

Ainsi, cette pièce 31 mobile est déplaçable axialement sur l'arbre ou la section d'arbre qui la porte, par contact d'appui avec l'organe 5 rotatif moteur pour le passage d'une position embrayée à une position débrayée et pour le passage d'une position débrayée à une position embrayée.

Dans les exemples représentés aux figures 2 à 7C, la pièce 31 mobile du mécanisme 3 d'embrayage est une pièce freinée de manière permanente par un frein 8 à action permanente sur la vitesse angulaire de ladite pièce 31 mobile. Ce frein 8 affecte ici la forme d'une lame ressort en U. L'âme du U est munie d'un perçage traversant pour pouvoir enfiler le frein sur l'arbre. Les branches du U prennent chacune appui sur la surface périphérique de la pièce 31 mobile qui se présente sous forme d'un plateau circulaire évidé centralement pour pouvoir être enfilé sur l'arbre 6 ou la section d'arbre qui le porte. Ce frein 8 est monté fixe en rotation à l'intérieur du boîtier. A cet effet, le frein 8 est, par exemple, muni de deux ergots disposés au niveau des branches du U. Ces ergots viennent s'insérer dans des rainures ménagées dans le boîtier. Cette coopération ergots/rainures permet une immobilisation en rotation du frein 8 à l'intérieur du boîtier.

Cette pièce 31 mobile est disposée entre une pièce 7 appelée crabot fixe, montée solidaire en rotation de l'arbre 6 ou de la section d'arbre qui la porte et une partie de l'organe 5 rotatif moteur.

Ce crabot 7 dit fixe par rapport à l'arbre 6 ou à la section d'arbre qui le porte affecte également la forme d'un plateau circulaire évidé centralement. La pièce 31 mobile et le crabot 7 fixe sont équipés de dents 9 axiales, c'est-à-dire à chaque fois en saillie d'une face du plateau formant la pièce 31 mobile ou le crabot 7 fixe. Ainsi, en position rapprochée de la pièce 31 mobile et du crabot 7 fixe correspondant, à l'état embrayé du mécanisme 3 d'embrayage, les dents 9 de la pièce 31 mobile et les dents 9 du crabot 7 fixe qui forment chacune une crénelure s'imbriquent pour une solidarisation en rotation de la pièce 31 mobile et du crabot 7 fixe.

Pour permettre un tel déplacement axial de la pièce 31 mobile entre une position rapprochée du crabot 7 fixe correspondant à l'état embrayé du mécanisme 3 d'embrayage et une position écartée du crabot 7 fixe correspondant à l'état débrayé du mécanisme 3 d'embrayage, la pièce 31 mobile est équipée de rampes 10 configurées pour coopérer par contact d'appui avec des rampes 11 complémentaires ménagées sur l'organe 5 rotatif moteur.

Dans les exemples représentés, l'organe 5 rotatif moteur qui affecte extérieurement la forme d'une roue dentée est ici, pour une facilité de fabrication, réalisé en deux parties solidaires en rotation avec chaque partie portant des rampes 11. Cet organe 5 rotatif moteur aurait pu, de manière équivalente, être réalisé d'une seule pièce. Cet organe 5 rotatif moteur, qui affecte la forme d'une roue dentée avec un moyeu de roue et une denture périphérique externe ménage un espace annulaire entre le moyeu de la roue et la denture périphérique externe de la roue. Le moyeu forme un manchon sur lequel peut être enfilée la pièce 31 mobile.

À l'état enfilé de la pièce 31 mobile sur le moyeu de roue de l'organe 5 rotatif, une partie des rampes 10 de la pièce 31 mobile sont susceptibles de venir en contact d'appui avec une partie des rampes 11 de l'organe 5 rotatif moteur. En pratique, les rampes 10 de la pièce 31 mobile sont disposées à l'intérieur de l'évidement du plateau évidé centralement formant ladite pièce 31 mobile. Ces rampes 10 de la pièce 31 mobile sont organisées en deux séries de rampes avec les rampes 10A actives en marche avant et les rampes 10B actives en marche arrière. Ces rampes de chaque série 10A ou 10B de rampes comprennent une pluralité d'ensemble de rampes représentées en 10A1 et 10A2 pour la série de rampes 10A et en 10B1 et 10B2 pour la série de rampes 10B. Ces ensembles de rampes sont répartis circonférentiellement sur la pièce 31 mobile. Chaque ensemble de rampes 10A1, 10A2 ou 10B1, 10B2 comprend deux rampes.

Dans les exemples représentés, les rampes 10A1, 10A2 d'un ensemble de rampes de la première série de rampes du plateau 31 forment avec les rampes 10B1, 10B2 d'un ensemble de rampes de la deuxième série de rampes du plateau 31 un losange. Ces rampes 10A1, 10A2, 10B1, 10B2 sont de préférence des rampes hélicoïdales avec un pas d'hélice identique. Les rampes 10A1, 10A2 d'un ensemble de rampes de la série de rampes 10A de la pièce mobile 31 sont disposées de part et d'autre d'un plan perpendiculaire à l'arbre 6 ou à la section d'arbre 6A ou 6B qui porte la pièce 31 mobile. Les rampes 10A1 disposées d'un même côté du plan sont disposées sur un même cercle de centre passant par l'arbre 6 ou la section d'arbre 6A ou 6B qui porte la pièce 31 mobile. Il en est de même des rampes 10A2 disposées de l'autre côté du plan. Les rampes 10A1, 10A2 d'un ensemble de rampes de la série de rampes 10A forment donc deux côtés adjacents du losange.

De la même manière, les rampes 10B1, 10B2 de chaque ensemble de rampes de la série de rampes 10B de la pièce mobile 31 sont disposées de part et d'autre d'un plan perpendiculaire à l'arbre 6 ou à la section d'arbre 6A ou 6B qui porte la pièce 31 mobile. Les rampes 10B1 disposées d'un même côté du plan sont disposées sur un même cercle de centre passant par l'arbre 6 ou la section d'arbre 6A ou 6B qui porte la pièce 31 mobile. Il en est de même des rampes 10B2 disposées de l'autre côté du plan. Les rampes 10B1, 10B2 d'un ensemble de rampes de la série de rampes 10B forment donc les deux autres côtés adjacents du losange.

Les rampes 11 de l'organe 5 rotatif moteur sont, de la même manière organisées en deux séries de rampes représentées en 11A et 11B aux figures, avec les rampes 11A1, 11A2 de la série de rampes 11A actives en marche avant, c'est-à-dire à l'état entraîné en rotation de l'organe 5 rotatif moteur dans le premier sens d'entraînement en rotation dit marche avant, et les rampes 11B1, 11B2 de la série de rampes 11B actives en marche arrière, c'est-à-dire à l'état entraîné en rotation de l'organe 5 rotatif moteur dans le deuxième sens d'entraînement en rotation dit marche arrière.

Ces rampes 11A et 11B forment deux crénelures circulaires en dents de scie coaxiales à l'arbre 6 ou à la section d'arbre qui porte l'organe 5 rotatif moteur et décalées axialement le long dudit arbre.

Ces crénelures circulaires sont disposées en regard l'une de l'autre, de part et d'autre des rampes 10A1, 10A2, 10B1, 10B2 portées par la pièce 31 mobile. Ainsi, les rampes 10 du plateau constitutif de la pièce 31 mobile s'étendent entre les rampes 11 complémentaires de l'organe 5 rotatif moteur. Les rampes 11 complémentaires de l'organe 5 rotatif moteur s'étendent donc de part et d'autre des rampes 10 du plateau 31 constitutif de la pièce 31 mobile. Ces rampes 11 de l'organe 5 rotatif moteur peuvent donc agir tour à tour sur les rampes 10 de la pièce 31 mobile.

Chaque crénelure de rampes en dents de scie formée par des rampes de l'organe 5 rotatif moteur est formée d'une alternance d'une rampe de l'organe 5 rotatif moteur active en marche avant et d'une rampe de l'organe 5 rotatif moteur active en marche arrière. Ainsi, l'un des flancs d'une dent de scie de la crénelure est formé par une rampe 11A de l'organe 5 rotatif moteur active en marche avant, tandis que l'autre flanc de la dent de scie de la crénelure est formé par une rampe 11B de l'organe 5 rotatif moteur active en marche arrière.

Les rampes 11A de la série de rampes actives en marche avant de l'organe 5 rotatif moteur comprennent une pluralité d'ensembles de rampes avec chaque ensemble de rampe comprenant deux rampes représentées en 11A1 et 11A2 aux figures, avec l'une des rampes, par exemple la rampe 11A1 dudit ensemble appartenant à l'une des crénelures de rampe et l'autre rampe telle que la rampe 11A2 appartenant à l'autre crénelure.

De la même manière, les rampes 11B de la série de rampes actives en marche arrière de l'organe 5 rotatif moteur comprennent une pluralité d'ensembles de rampes représentées en 11B1 et 11B2 aux figures, avec l'une des rampes, par exemple la rampe 11B1 dudit ensemble appartenant à l'une des crénelures de rampe et l'autre rampe telle que la rampe 11B2 appartenant à l'autre crénelure.

Les rampes 11A1, 11A2 d'un ensemble de rampes de la série de rampes 11A actives en marche avant de l'organe 5 rotatif moteur coopèrent par contact d'appui avec les rampes 10A1, 10A2 d'un ensemble de rampes de la série de rampes 10A actives en marche avant de la pièce 31 mobile pour un déplacement axial de la pièce 31 mobile le long de l'arbre 6 ou de la section d'arbre qui la porte, dans le sens d'un rapprochement ou d'un écartement du crabot 7 fixe.

Ainsi, à l'état entraîné en rotation de l'organe 5 rotatif moteur suivant le premier sens d'entraînement en rotation dit marche avant et lorsque la vitesse de rotation de l'organe 5 rotatif moteur est supérieure à celle de l'arbre ou de la section d'arbre portant le mécanisme d'embrayage, les rampes 11A1 de l'organe 5 rotatif moteur portées par la crénelure en dents de scie la plus éloignée du crabot 7 fixe coopèrent par contact d'appui avec les rampes 10A1 actives en marche avant et qui forment un côté du losange de la pièce 31 mobile pour un décalage axial de la pièce 31 mobile dans le sens d'un rapprochement du crabot 7 fixe correspondant au passage de l'état débrayé à l'état embrayé du mécanisme d'embrayage.

De la même manière, à l'état embrayé du mécanisme d'embrayage et entraîné en rotation de l'organe 5 rotatif moteur suivant le premier sens d'entraînement en rotation dit marche avant, lorsque la vitesse de rotation de l'organe 5 rotatif moteur devient inférieure à la vitesse de rotation de l'arbre 6 ou de la section d'arbre qui porte le mécanisme d'embrayage, les rampes 11A2 de l'organe 5 rotatif portées par la crénelure en dent de scie la plus proche du crabot 7 fixe coopèrent par contact d'appui avec les rampes 10A2 actives en marche avant qui forment un autre côté du losange de la pièce 31 mobile pour un décalage axial de la pièce 31 mobile dans le sens d'un écartement du crabot 7 fixe pour le passage de l'état embrayé à l'état débrayé du mécanisme d'embrayage.

Le fonctionnement est similaire en marche arrière, les rampes 11B1 et 10B1 coopérant entre elles pour le passage de l'état débrayé à l'état embrayé et les rampes 11B1 et 10B2 coopérant entre elles pour le passage de l'état embrayé à l'état débrayé.

Ainsi, l'organe 5 rotatif moteur porte l'ensemble des rampes nécessaires au déplacement axial de la pièce 31 mobile dans le sens d'un embrayage ou d'un débrayage. Il en résulte une simplicité et une fiabilité mécanique de l'ensemble.

Pour parfaire l'ensemble, la pièce 31 mobile du mécanisme 3 d'embrayage et l'organe 5 rotatif moteur sont, pour l'entraînement en rotation de la pièce 31 mobile par l'organe 5 rotatif moteur munis chacun de dents 12. Chaque dent 12 de la pièce 31 mobile est montée avec jeu dans l'espace entre deux dents 12 de l'organe 5 rotatif moteur. Ces dents 12 sont des dents axiales ménagées sur l'une des faces du plateau formant la pièce 31 mobile et dans l'espace annulaire en regard de l'organe 5 rotatif moteur.

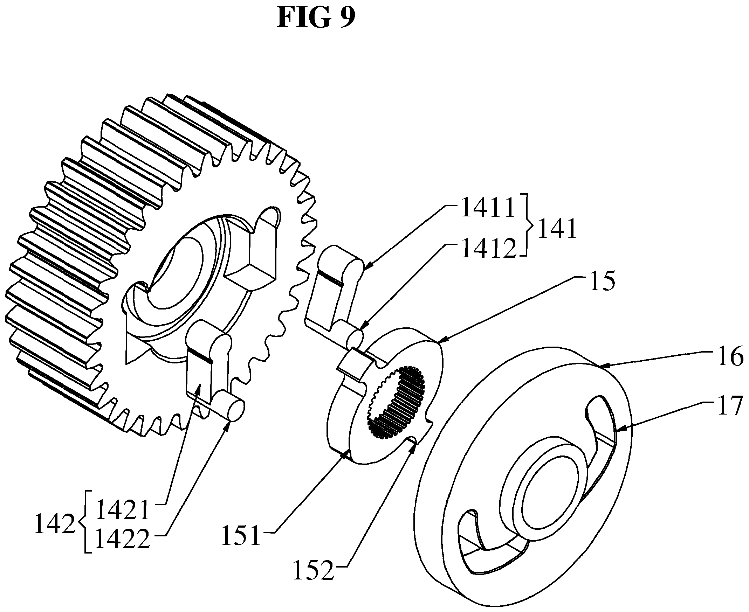

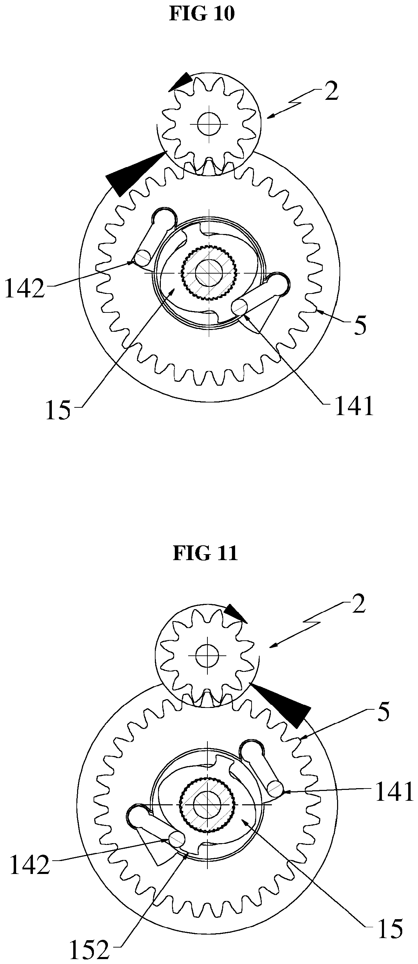

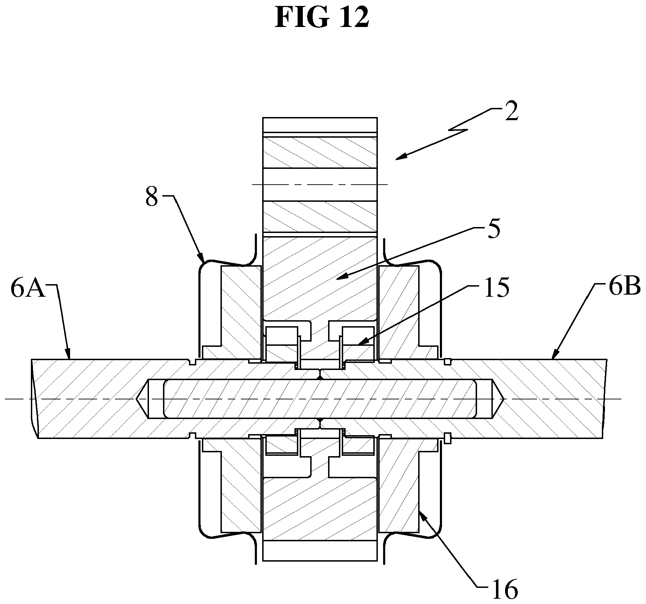

En variante, le mécanisme 4 d'embrayage peut être conforme à celui représenté aux figures 8 à 13C. Dans ce mode de réalisation, chaque mécanisme 4 d'embrayage comprend deux crabots mobiles représentés en 141 et 142 aux figures et appelés, l'un, crabot 141 mobile marche avant, l'autre, crabot 142 mobile marche arrière. Chacun de ces crabots mobiles est porté par l'organe 5 rotatif moteur.

Ledit mécanisme 4 d'embrayage comprend encore un élément 15 de crabot dit fixe, monté fixe axialement et solidaire en rotation de l'arbre 6 ou de la section d'arbre portant ledit mécanisme 4 d'embrayage et un pilote 16 de crabotage.

Dans ce mode de réalisation, c'est le pilote 16 de crabotage qui est une pièce freinée de manière permanente par un frein 8 à action permanente sur la vitesse angulaire du pilote 16 de crabotage. Ce frein 8 est à nouveau une lame ressort en U. Lorsque l'arbre est formé de deux sections d'arbre portant chacune un mécanisme d'embrayage comme dans l'exemple représenté à la figure8, chaque lame ressort est enfilée sur l'arbre de sortie et les branches du U de chaque lame ressort viennent en contact d'appui sur un pilote 16 de crabotage.

Dans les exemples représentés, ce pilote 16 de crabotage se présente sous forme d'une pièce rotative montée de manière coaxiale et libre à rotation sur l'arbre ou la section d'arbre qui le porte.

Ce pilote 16 de crabotage est une pièce rotative de type plateau traversée par l'arbre 6 ou la section d'arbre qui le porte. Cette pièce rotative est munie d'au moins une lumière traversante formant le chemin 17 de guidage du pilote 16 de crabotage.

Dans les exemples représentés, ce chemin 17 de guidage est ménagé à l'aide de deux lumières traversantes ménagées dans le pilote 16 de crabotage. En effet, ce pilote 16 de crabotage est équipé d'un chemin 17 de guidage de chaque crabot 141, 142 mobile pour permettre sélectivement le passage de chaque crabot 141, 142 mobile d'un état débrayé à un état embrayé en prise avec l'élément 15 de crabot fixe.

Le chemin 17 de guidage du pilote 16 de crabotage est configuré pour permettre le passage du crabot 141 mobile marche avant à l'état embrayé, à l'état entraîné en rotation de l'organe 5 rotatif moteur suivant le premier sens d'entraînement en rotation dit marche avant lorsque la vitesse dudit organe 5 rotatif moteur est supérieure à celle de l'arbre ou de ladite section d'arbre avec lequel le mécanisme d'embrayage est apte à coopérer, et le passage du crabot 142 mobile marche arrière à l'état embrayé, à l'état entraîné en rotation de l'organe 5 rotatif moteur suivant le deuxième sens d'entraînement en rotation dit marche arrière lorsque la vitesse de rotation de l'organe 5 rotatif moteur est supérieure à celle de l'arbre 6 ou de la section 6A, 6B d'arbre avec lequel le mécanisme 4 d'embrayage est apte à coopérer.

Dans les exemples représentés, chaque crabot 141, 142 mobile porté par l'organe 5 rotatif moteur affecte la forme d'un levier pivotant monté mobile à pivotement autour d'un axe parallèle à l'arbre 6 ou aux sections d'arbre portant ledit crabot mobile pour le passage dudit crabot 141, 142 mobile d'un état débrayé à un état embrayé ou inversement.

À cet effet, chaque levier 1411 ou 1421 pivotant présente une extrémité arrondie sous forme d'un tronçon de cylindre, cette extrémité arrondie venant s'insérer dans un logement cylindrique fendu longitudinalement de l'organe 5 rotatif moteur. Ce logement cylindrique débouche dans une des faces de la roue dentée formée par l'organe 5 rotatif moteur. La forme dudit logement autorise un déplacement à pivotement du levier à l'intérieur du logement.

Ce levier 1411 ou 1421 pivotant est muni à son extrémité opposée à celle formant pivot d'un doigt s'insérant à l'intérieur du chemin 17 de guidage, c'est-à-dire de la lumière du pilote de crabotage. Ce doigt est représenté en 1412 pour le crabot mobile marche avant 141 et en 1422 pour le crabot mobile marche arrière 142. Ce doigt est positionnable en contact d'appui avec l'élément 15 de crabot fixe à l'état embrayé du crabot mobile.

Dans les exemples représentés, l'élément 15 de crabot fixe affecte la forme d'une bague 151 montée solidaire en rotation de l'arbre 6 ou de la section d'arbre qui la porte. Cette bague 151 est munie d'au moins deux saillies 152 radiales externes. Le montage en rotation de la bague avec l'arbre qui la porte s'opère par l'intermédiaire de cannelures axiales ménagées à l'intérieur de la bague, ces cannelures coopérant avec des nervures de l'arbre ou de la section d'arbre portant l'élément 15 de crabot fixe.

Cette bague est encore munie de deux saillies 152 radiales externes formant une butée d'appui de l'un ou l'autre des crabots 141 ou 142 mobiles à l'état embrayé du mécanisme 4 d'embrayage selon le sens de fonctionnement, c'est-à-dire d'entraînement à rotation sélectionné par l'organe 5 rotatif moteur.

Le chemin 17 de guidage du pilote 16 de crabotage comprend donc, au niveau de chaque lumière et donc, pour chaque crabot mobile, une première partie positionnée sur un cercle de centre confondu avec l'axe de rotation de l'arbre 6 et une seconde partie disposée dans le prolongement de la première partie et conformée pour se développer en tendant à se rapprocher de l'axe de rotation du pilote 16 de crabotage. Ces première et deuxième parties d'une lumière du chemin de guidage permettent ainsi à un doigt d'un crabot mobile, lorsqu'il se déplace à l'intérieur desdites première et deuxième parties, de passer, par pivotement du levier qui le porte, d'une position écartée de l'élément 15 du crabot fixe lorsqu'il circule dans la première partie du chemin de guidage, à une position rapprochée de l'élément 15 du crabot fixe lorsqu'il circule dans la deuxième partie du chemin de guidage, ce doigt étant, dans la deuxième partie du chemin de guidage, positionnable en contact d'appui avec une saillie 152 radiale de l'élément 15 de crabot fixe pour transmettre le mouvement de rotation de l'organe 5 rotatif moteur à l'élément 15 de crabot fixe.

Les première et deuxième parties du chemin de guidage du crabot mobile marche avant sont réalisées avec les première et deuxième parties du chemin de guidage du crabot mobile marche arrière en correspondance pour permettre, lorsque le doigt du crabot mobile marche avant est disposé dans la première partie du chemin de guidage, que le doigt du crabot mobile marche arrière soit disposé dans la deuxième partie du chemin de guidage et inversement, la jonction entre les première et deuxième parties du chemin de guidage ménagée au niveau de chaque lumière du chemin de guidage correspondant à la position prise par chacun des doigts en position écartée des deux doigts de l'élément 15 de crabot fixe.

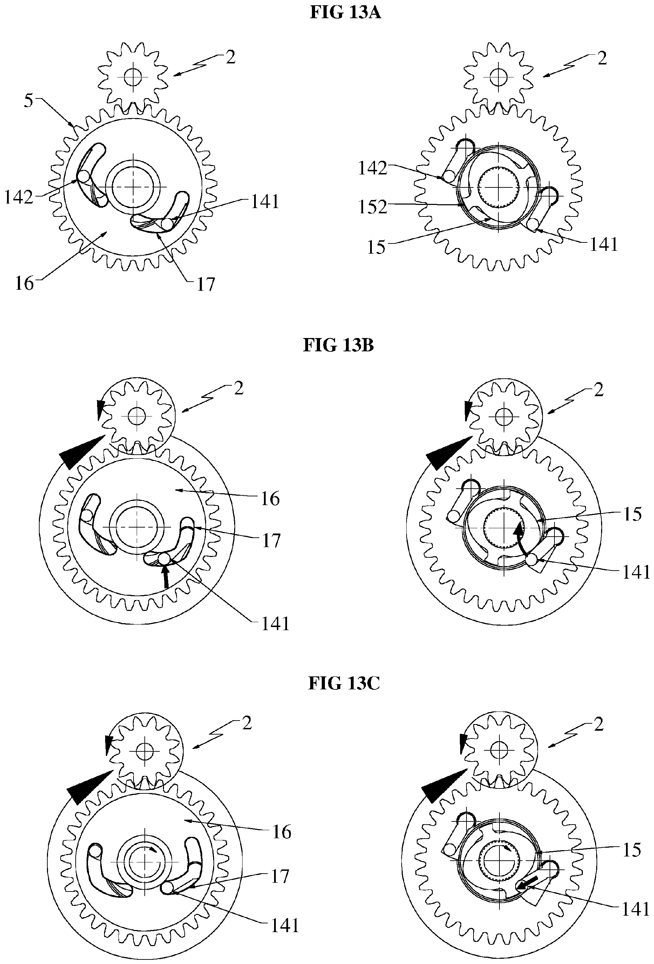

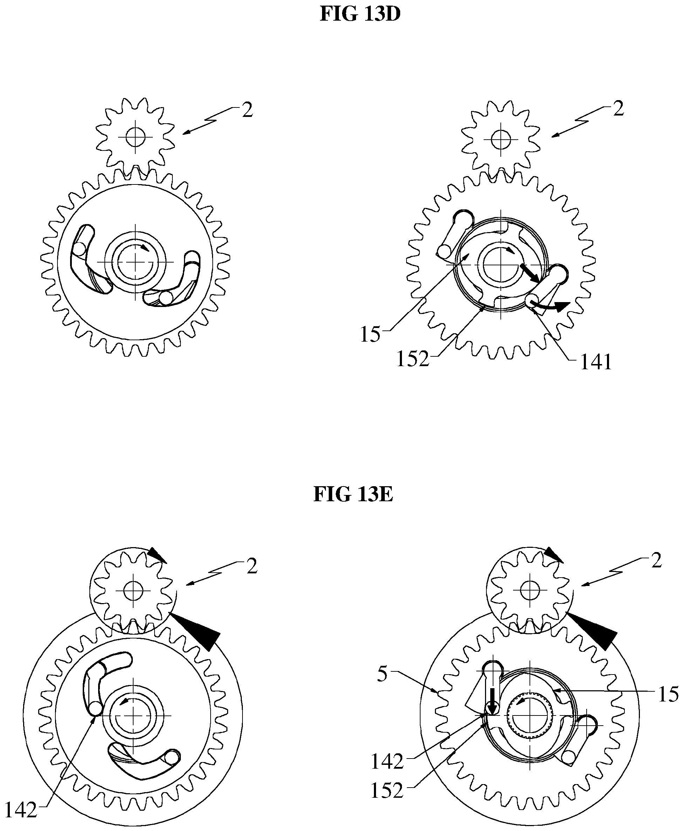

En pratique, le crabotage s'opère comme suit : à l'état débrayé, les doigts des crabots marche avant et marche arrière sont disposés chacun en position écartée de l'élément de crabot fixe à la jonction des première et deuxième parties de leur chemin 17 de guidage comme illustré à la figure 13A. Lorsque l'organe 5 rotatif moteur est entraîné en rotation en marche avant, le crabot mobile marche avant 141 tend à se rapprocher de l'élément 15 de crabot fixe par déplacement du doigt dudit crabot dans la deuxième partie du chemin 17 de guidage ménagé sur le pilote 16 de crabotage, qui est freiné. En parallèle, le doigt du crabot mobile marche arrière 142 se déplace dans la première partie de son chemin 17 de guidage ménagé sur le pilote 16 de crabotage et reste en position écartée de l'élément 15 de crabot fixe.

Lors de la poursuite de l'entraînement en rotation en marche avant de l'organe 5 rotatif moteur, le doigt du crabot mobile marche avant 141 vient en contact avec une saillie 152 radiale de l'élément 15 de crabot fixe, de sorte que l'élément 15 de crabot fixe et par suite l'arbre 6 ou la section d'arbre qui le porte et avec lequel l'élément 15 de crabot fixe est monté solidaire en rotation est entraîné en rotation en marche avant.

Le fonctionnement du crabot mobile marche arrière est similaire à celui décrit ci-dessus pour le crabot mobile marche avant, à l'état entraîné de l'organe 5 rotatif moteur en marche arrière.

Pour permettre un décrabotage du mécanisme 4 d'embrayage, le mécanisme 4 d'embrayage comprend une came de décrabotage qui est formée par l'élément 15 de crabot fixe. En effet, l'élément 15 de crabot fixe forme une came de décrabotage du crabot 141 mobile marche avant à l'état entraîné en rotation en marche avant de l'arbre 6 ou de la section d'arbre avec lequel le mécanisme d'embrayage coopère lorsque la vitesse de rotation de l'arbre 6 ou de ladite section 6A, 6B d'arbre est supérieure à la vitesse de rotation de l'organe 5 rotatif moteur et une came de décrabotage du crabot 142 mobile marche arrière à l'état entraîné en rotation en marche arrière de l'arbre 6 ou de la section d'arbre avec lequel le mécanisme d'embrayage coopère lorsque la vitesse de rotation de l'arbre ou de la section d'arbre est supérieure à la vitesse de rotation de l'organe 5 rotatif moteur.

La partie formant came de décrabotage de l'élément 15 de crabot fixe est formée par la partie de la surface périphérique externe de la bague 151 constitutive de l'élément 15 de crabot fixe ménagée entre les saillies 152 radiales externes. On comprend ainsi, comme l'illustre la figure 13D, que lorsque l'arbre 6 ou la section d'arbre portant l'élément 15 de crabot fixe tourne plus vite en marche avant que l'organe 5 rotatif moteur, le doigt du crabot mobile marche avant vient en contact avec la surface de came de l'élément 15 de crabot fixe et est guidé en déplacement par son chemin 17 de guidage dans le sens d'un écartement de l'élément 15 de crabot fixe jusqu'à une position dans laquelle il s'étend à la jonction des première et deuxième parties de son chemin 17 de guidage ménagé dans le pilote 16 de crabotage. À nouveau, le fonctionnement est similaire pour le crabot mobile marche arrière à l'état entraîné de l'arbre 6 ou de la section d'arbre portant l'élément 15 de crabot en marche arrière à une vitesse supérieure à celle de l'organe 5 rotatif moteur.

Pour parfaire ledit boîtier, et indépendamment du mode de réalisation du ou de chaque mécanisme d'embrayage, le ou chaque mécanisme d'embrayage est en outre, à l'état embrayé, configuré pour passer de l'état embrayé à l'état débrayé par inversion du sens de rotation de l'organe 5 rotatif moteur sur une plage angulaire prédéterminée. Cette commande d'inversion de sens de rotation de l'organe 5 rotatif moteur sur une plage angulaire prédéterminée peut s'effectuer automatiquement à l'aide de la commande d'entraînement en rotation du moteur disposée au niveau du guidon, par exemple, lors du relâchement de ladite commande. Ainsi, le relâchement de la commande au guidon permet, à l'aide d'un commutateur ou d'un capteur correspondant à la position relâchée de la commande, d'adresser automatiquement à l'unité de contrôle du moteur un signal de commande d'inversion du sens du moteur pour générer l'entraînement en rotation de l'organe 5 rotatif moteur dans un sens opposé sur une plage angulaire prédéterminée en vue du rappel du mécanisme d'embrayage à l'état débrayé. Au-delà de cette plage angulaire prédéterminée, la poursuite de l'entraînement en rotation de l'organe 5 rotatif moteur entraîne à nouveau le passage du mécanisme d'embrayage de l'état débrayé à l'état embrayé.

Il doit être noté que le boîtier qui loge au moins partiellement l'ensemble des éléments décrits ci-dessus est formé généralement de deux coquilles assemblées par un plan de joint.

De même, il doit être noté que lorsque l'arbre 6 est formé d'un seul tenant et non pas de sections d'arbre, le boîtier de transmission ne comprend qu'un seul mécanisme d'embrayage dont le fonctionnement est similaire à celui décrit pour un mécanisme d'embrayage équipant une section d'arbre.

Pour la conduite d'un engin équipé d'un boîtier de transmission du type décrit ci-dessus, il suffit à l'opérateur de commander le sens d'entraînement en marche avant ou en marche arrière de l'organe 5 rotatif moteur. L'embrayage ou le débrayage s'opèrent alors uniquement en fonction des vitesses relatives de l'organe 5 rotatif moteur et l'arbre 6 ou de sections 6A, 6B d'arbre.

## Revendications

1. Boîtier (1) de transmission comprenant logés au moins partiellement à l'intérieur dudit boîtier (1), un arbre (6) dit de sortie réalisé d'un seul tenant ou en au moins deux sections (6A, 6B) d'arbre coaxiales, un organe rotatif (5) dit moteur monté libre à rotation sur ledit arbre (6), un système (2) d'entraînement en rotation dudit organe (5) rotatif moteur suivant un premier sens d'entraînement en rotation dit marche avant et suivant un deuxième sens d'entraînement en rotation dit marche arrière et, disposé entre l'arbre (6) ou chacune des sections (6A, 6B) d'arbre et l'organe (5) rotatif moteur, un mécanisme (3,4) d'embrayage, le ou chaque mécanisme (3,4) d'embrayage logé à l'intérieur du boîtier (1) de transmission présentant un état débrayé et un état embrayé, l'arbre (6) ou chaque section d'arbre (6A ; 6B) étant, à l'état débrayé du mécanisme (3,4) d'embrayage correspondant, libre de tourner dans l'un quelconque de ses sens de rotation, le ou chaque mécanisme (3,4) d'embrayage dit automatique étant configuré pour, à l'état entraîné en rotation de l'organe (5) rotatif moteur suivant le premier sens d'entraînement en rotation dit marche avant, passer de l'état débrayé à l'état embrayé lorsque la vitesse de rotation dudit organe (5) rotatif moteur est supérieure à celle de l'arbre (6) ou de ladite section (6A ; 6B) d'arbre avec lequel le mécanisme (3,4) d'embrayage est apte à coopérer, et de l'état embrayé à l'état débrayé par l'entraînement en rotation en marche avant de l'arbre (6) ou de la section (6A ; 6B) d'arbre avec lequel le mécanisme d'embrayage coopère, lorsque la vitesse de rotation de l'arbre (6) ou de ladite section (6A ; 6B) d'arbre est supérieure à la vitesse de rotation de l'organe (5) rotatif moteur, **caractérisé en ce que** le ou chaque mécanisme (3,4) d'embrayage dit automatique est un mécanisme (3,4) d'embrayage à deux sens de fonctionnement et est en outre configuré pour, à l'état entraîné en rotation de l'organe (5) rotatif moteur suivant le deuxième sens d'entraînement en rotation dit marche arrière, passer de l'état débrayé à l'état embrayé lorsque la vitesse de rotation dudit organe (5) rotatif moteur est supérieure à celle de l'arbre (6) ou de ladite section (6A ; 6B) d'arbre avec lequel le mécanisme (3,4) d'embrayage est apte à coopérer, et de l'état embrayé à l'état débrayé par l'entraînement en rotation en marche arrière de l'arbre (6) ou de la section (6A ; 6B) d'arbre avec lequel le mécanisme (3,4) d'embrayage coopère, lorsque la vitesse de rotation de l'arbre (6) ou de ladite section (6A ; 6B) d'arbre est supérieure à la vitesse de rotation de l'organe (5) rotatif moteur.

2. Boîtier (1) de transmission selon la revendication 1, **caractérisé en ce que** le ou au moins l'un des mécanismes (3) d'embrayage comprend une pièce (31) mobile sur l'arbre (6) ou la section (6A, 6B) d'arbre entre une position débrayée et une position embrayée, ladite pièce (31) entraînable en rotation par l'organe (5) rotatif moteur étant configurée pour passer de la position embrayée correspondant à l'état embrayé du mécanisme (3) d'embrayage à la position débrayée correspondant à l'état débrayé du mécanisme (3) d'embrayage par contact d'appui avec l'organe (5) rotatif moteur.

3. Boîtier (1) de transmission selon la revendication précédente, **caractérisé en ce que** la pièce (31) mobile du mécanisme (3) d'embrayage est configurée pour passer de la position débrayée à la position embrayée par contact d'appui avec l'organe (5) rotatif moteur.

4. Boîtier (1) de transmission selon l'une des revendications 2 ou 3, **caractérisé en ce que** la pièce (31) mobile du mécanisme (3) d'embrayage est une pièce disposée entre une pièce (7) dite crabot (7) fixe montée solidaire en rotation de l'arbre (6) ou de la section (6A, 6B) d'arbre associée au mécanisme (3) d'embrayage et une partie de l'organe (5) rotatif moteur, cette pièce (31) mobile du mécanisme (3) d'embrayage étant une pièce mobile axialement sur ledit arbre (6) ou ladite section (6A, 6B) d'arbre entre une position rapprochée dudit crabot (7) fixe correspondant à l'état embrayé du mécanisme (3) d'embrayage et une position écartée du crabot (7) fixe correspondant à l'état débrayé du mécanisme (3) d'embrayage.

5. Boîtier (1) de transmission selon l'une des revendications 2 à 4, **caractérisé en ce que** la pièce (31) mobile du mécanisme (3) d'embrayage est une pièce freinée de manière permanente par un frein (8) à action permanente sur la vitesse angulaire de ladite pièce (31) mobile.

6. Boîtier (1) de transmission selon l'une des revendications 4 ou 5, **caractérisé en ce que** la pièce (31) mobile du mécanisme (3) d'embrayage est un plateau (31) évidé et **en ce que** le plateau (31) et le crabot (7) fixe sont respectivement équipés de dents (9) pour une solidarisation en rotation du plateau (31) et du crabot (7) fixe à l'état rapproché du plateau (31) du crabot (7) fixe.

7. Boîtier (1) de transmission selon la revendication 4 ou l'une des revendications 5 ou 6 prise en combinaison avec la revendication 4, **caractérisé en ce que** la pièce (31) mobile du mécanisme (3) d'embrayage est un plateau (31) équipé de rampes (10) configurées pour coopérer par contact d'appui avec des rampes (11) complémentaires ménagées sur l'organe (5) rotatif moteur pour un déplacement axial du plateau dans le sens d'un rapprochement ou d'un écartement du crabot (7) fixe solidaire en rotation de l'arbre (6) ou de la section (6A, 6B) d'arbre associée au mécanisme (3) d'embrayage.

8. Boîtier (1) de transmission selon la revendication précédente, **caractérisé en ce que** les rampes (10) du plateau (31) et (11) de l'organe (5) rotatif moteur sont chacune organisées en une première et une deuxième série de rampes, avec les rampes (10A, 11A) de l'une des séries actives en marche avant et les rampes (10B, 11B) de l'autre série actives en marche arrière, ces rampes de chaque série de rampes comprenant une pluralité d'ensembles de rampes (10A1, 10A2 ; 10B1, 10B2 ; 11A1, 11A2 ; 11B1, 11B2), chaque ensemble de rampes (11A1, 11A2) ou (11B1, 11B2) d'une série de rampes (11A) ou (11B) de l'organe (5) rotatif moteur comprenant au moins deux rampes (11A1, 11A2) ou (11B1, 11B2), ces rampes de l'organe (5) rotatif moteur coopérant l'une (11A1) avec l'une (10A1) des rampes (10A1, 10A2) d'un ensemble de rampes d'une série de rampes du plateau (31) pour un déplacement axial du plateau (31) dans le sens d'un rapprochement du crabot (7) fixe correspondant à la position embrayée, l'autre (11A2) avec l'autre (10A2) des rampes dudit ensemble de rampes d'une série de rampes du plateau (31) pour un déplacement axial du plateau (31) dans le sens d'un écartement du crabot (7) fixe correspondant à la position débrayée.

9. Boîtier (1) de transmission selon la revendication précédente, **caractérisé en ce que** les rampes (10A1, 10A2) d'un ensemble de rampes de la première série de rampes du plateau (31) forment avec les rampes (10B1, 10B2) d'un ensemble de rampes de la deuxième série de rampes du plateau (31) un losange, ces rampes (10A1, 10A2, 10B1, 10B2) étant de préférence des rampes hélicoïdales avec un pas d'hélice identique.

10. Boîtier (1) de transmission selon l'une des revendications 2 à 9, **caractérisé en ce que** la pièce (31) mobile du ou de l'un des mécanismes (3) d'embrayage et l'organe (5) rotatif moteur sont pour l'entraînement en rotation de la pièce (31) mobile par l'organe (5) rotatif moteur munis chacun de dents (12), chaque dent (12) de la pièce (31) mobile étant montée avec jeu dans l'espace entre deux dents (12) de l'organe (5) rotatif moteur.

11. Boîtier (1) de transmission selon la revendication 1, **caractérisé en ce que** le ou chaque mécanisme (4) d'embrayage comprend, deux crabots (141, 142) dits mobiles l'un (141), marche avant, l'autre (142), marche arrière, portés par l'organe (5) rotatif moteur, un élément (15) de crabot dit fixe solidaire en rotation de l'arbre (6) ou de la section (6A,6B) d'arbre portant ledit mécanisme (4) d'embrayage et un pilote (16) de crabotage, ledit pilote (16) de crabotage monté, de manière coaxiale et libre à rotation sur l'arbre (6) ou de la section (6A,6B) d'arbre qui le porte, étant une pièce freinée de manière permanente par un frein (8) à action permanente sur la vitesse angulaire dudit pilote (16) de crabotage, ce pilote (16) de crabotage étant équipé d'un chemin (17) de guidage des crabots (141, 142) mobiles pour permettre sélectivement le passage de chaque crabot (141, 142) mobile d'un état débrayé à un état embrayé en prise avec l'élément (15) de crabot dit fixe, ledit chemin (17) de guidage du pilote (16) de crabotage étant configuré pour permettre le passage du crabot (141) mobile marche avant à l'état embrayé, à l'état entraîné en rotation de l'organe (5) rotatif moteur suivant le premier sens d'entraînement en rotation dit marche avant, lorsque la vitesse de rotation dudit organe (5) rotatif moteur est supérieure à celle de l'arbre (6) ou de ladite section (6A ; 6B) d'arbre avec lequel le mécanisme (4) d'embrayage est apte à coopérer, et le passage du crabot (142) mobile marche arrière à l'état embrayé, à l'état entraîné en rotation de l'organe (5) rotatif moteur suivant le deuxième sens d'entraînement en rotation dit marche arrière, lorsque la vitesse de rotation dudit organe (5) rotatif moteur est supérieure à celle de l'arbre (6) ou de ladite section (6A ; 6B) d'arbre avec lequel le mécanisme (4) d'embrayage est apte à coopérer, l'élément (15) de crabot fixe formant une came de décrabotage du crabot (141) mobile marche avant à l'état entraîné en rotation en marche avant de l'arbre (6) ou de la section (6A ; 6B) d'arbre avec lequel le mécanisme (4) d'embrayage coopère, lorsque la vitesse de rotation de l'arbre (6) ou de ladite section (6A ; 6B) d'arbre est supérieure à la vitesse de rotation de l'organe (5) rotatif moteur, et une came de décrabotage du crabot (142) mobile marche arrière à l'état entraîné en rotation en marche arrière de l'arbre (6) ou de la section (6A ; 6B) d'arbre avec lequel le mécanisme (4) d'embrayage coopère, lorsque la vitesse de rotation de l'arbre (6) ou de ladite section (6A ; 6B) d'arbre est supérieure à la vitesse de rotation de l'organe (5) rotatif moteur.

12. Boîtier (1) de transmission selon la revendication 11, **caractérisé en ce que** chaque crabot (141, 142) mobile affecte la forme d'un levier (1411, 1421) pivotant monté mobile à pivotement autour d'un axe parallèle à l'arbre (6) ou aux sections (6A ; 6B) d'arbre pour le passage dudit crabot (141, 142) mobile d'un état débrayé à un état embrayé ou inversement.

13. Boîtier (1) de transmission selon la revendication 12, **caractérisé en ce que** ledit levier (1411, 1421) pivotant est muni d'un doigt (1412, 1422) disposé le long ou à l'intérieur du chemin (17) de guidage du pilote (16) de crabotage, ce doigt (1412, 1422) étant positionnable en contact d'appui avec l'élément (15) de crabot fixe.

14. Boîtier (1) de transmission selon l'une des revendications 11 à 13, **caractérisé en ce que** l'élément (15) de crabot fixe affecte la forme d'une bague (151) montée solidaire en rotation de l'arbre (6) ou de la section (6A, 6B) d'arbre qui la porte, ladite bague (151) étant munie d'au moins deux saillies (152) radiales externes, l'une ou l'autre desdites saillies (152) radiales externes formant une butée d'appui de l'un des crabots (141, 142) mobiles à l'état embrayé du mécanisme (4) d'embrayage, au moins une partie de la surface périphérique externe de la bague (151) ménagée entre lesdites saillies (152) radiales externes étant configurée pour former la partie formant came de décrabotage dudit élément (15) de crabot fixe.

15. Boîtier (1) de transmission selon l'une des revendications 11 à 13, **caractérisé en ce que** le pilote (16) de crabotage affecte la forme d'une pièce rotative de type plateau traversée par l'arbre (6) ou la section (6A, 6B) d'arbre qui le porte, cette pièce rotative étant munie d'au moins une lumière traversante formant le chemin (17) de guidage dudit pilote (16) de crabotage.

16. Engin (20) automoteur roulant à conducteur de préférence marchant, tel qu'une tondeuse à gazon, comprenant un arbre (22) primaire moteur, des roues (21) et un boîtier (1) de transmission positionnable entre l'arbre (22) primaire moteur et les roues (21) dudit engin (20), **caractérisé en ce que** le boîtier (1) de transmission est conforme à l'une des revendications 1 à 15.

## Patentansprüche

1. Getriebekasten (1), umfassend, mindestens teilweise im Inneren des Kastens (1) untergebracht, eine als Ausgangswelle (6) bezeichnete Welle, die einstückig oder aus mindestens zwei koaxialen Wellenabschnitten (6A, 6B) hergestellt ist, ein als Motor bezeichnetes Rotationsorgan (5), das frei rotierend auf der Welle (6) angebracht ist, ein Rotationsantriebssystem (2) des Rotationsmotororgans (5) in einer ersten Rotationsantriebsrichtung, bezeichnet als Vorwärtsgang, und in einer zweiten Rotationsantriebsrichtung, bezeichnet als Rückwärtsgang, und, angeordnet zwischen der Welle (6) oder jedem der Wellenabschnitte (6A, 6B) und dem Rotationsmotororgan (5), einen Kupplungsmechanismus (3, 4), wobei der oder jeder im Inneren des Getriebekastens (1) untergebrachte Kupplungsmechanismus (3, 4) einen ausgekuppelten Zustand und einen eingekuppelten Zustand aufweist, wobei die Welle (6) oder jeder Wellenabschnitt (6A; 6B) im ausgekuppelten Zustand des entsprechenden Kupplungsmechanismus (3, 4) frei ist, in einer beliebigen ihrer Rotationsrichtungen zu drehen, wobei der oder jeder des als automatisch bezeichneten Kupplungsmechanismus (3, 4) dazu ausgelegt ist, im Rotationsantriebszustand des Rotationsmotororgans (5) in der ersten Rotationsantriebsrichtung, bezeichnet als Vorwärtsgang, aus dem ausgekuppelten Zustand in den eingekuppelten Zustand zu wechseln, wenn die Rotationsgeschwindigkeit des Rotationsmotororgans (5) höher als die der Welle (6) oder des Wellenabschnitts (6A; 6B) ist, mit dem der Kupplungsmechanismus (3, 4) imstande ist zusammenzuarbeiten, und aus dem eingekuppelten Zustand in den ausgekuppelten Zustand durch Rotationsantrieb im Vorwärtsgang der Welle (6) oder des Wellenabschnitts (6A; 6B), mit dem der Kupplungsmechanismus zusammenwirkt, wenn die Rotationsgeschwindigkeit der Welle (6) oder des Wellenabschnitts (6A; 6B) höher als die Rotationsgeschwindigkeit des Rotationsmotororgans (5) ist, **dadurch gekennzeichnet, dass** der oder jeder als automatisch bezeichneter Kupplungsmechanismus (3, 4) ein Kupplungsmechanismus (3, 4) mit zwei Betriebsrichtungen und ferner dazu ausgelegt ist, im Rotationsantriebszustand des Rotationsmotororgans (5) in der zweiten Rotationsantriebsrichtung, bezeichnet als Rückwärtsgang, aus dem ausgekuppelten Zustand in den eingekuppelten Zustand zu wechseln, wenn die Rotationsgeschwindigkeit des Rotationsmotororgans (5) höher als die der Welle (6) oder des Wellenabschnitts (6A; 6B) ist, mit dem der Kupplungsmechanismus (3, 4) imstande ist zusammenzuarbeiten, und aus dem eingekuppelten Zustand in den ausgekuppelten Zustand durch Rotationsantrieb im Rückwärtsgang der Welle (6) oder des Wellenabschnitts (6A; 6B), mit dem der Kupplungsmechanismus (3, 4) zusammenwirkt, wenn die Rotationsgeschwindigkeit der Welle (6) oder des Wellenabschnitts (6A; 6B) höher als die Rotationsgeschwindigkeit des Rotationsmotororgans (5) ist.

2. Getriebekasten (1) nach Anspruch 1, **dadurch gekennzeichnet, dass** der oder mindestens einer der Kupplungsmechanismen (3) ein auf der Welle (6) oder dem Wellenabschnitt (6A, 6B) zwischen einer ausgekuppelten Position und einer eingekuppelten Position bewegliches Teil (31) umfasst, wobei das von dem Rotationsmotororgan (5) rotatorisch antreibbares Teil (31) dazu ausgelegt ist, aus der eingekuppelten Position, die dem eingekuppelten Zustand des Kupplungsmechanismus (3) entspricht, in die ausgekuppelte Position, die dem ausgekuppelten Zustand des Kupplungsmechanismus (3) entspricht, durch Stützkontakt mit dem Rotationsmotororgan (5) zu wechseln.

3. Getriebekasten (1) nach vorangehendem Anspruch, **dadurch gekennzeichnet, dass** das bewegliche Teil (31) des Kupplungsmechanismus (3) dazu ausgelegt ist, aus der ausgekuppelten Position in die eingekuppelte Position durch Stützkontakt mit dem Rotationsmotororgan (5) zu wechseln.

4. Getriebekasten (1) nach einem der Ansprüche 2 oder 3, **dadurch gekennzeichnet, dass** das bewegliche Teil (31) des Kupplungsmechanismus (3) ein Teil ist, das zwischen einem als Klauenkupplung (7) bezeichneten festen Teil (7), das mit der Welle (6) oder dem Wellenabschnitt (6A, 6B), der dem Kupplungsmechanismus (3) zugeordnet ist, rotatorisch fest verbunden ist, und einem Teil des Rotationsmotororgans (5) angeordnet ist, wobei dieses bewegliche Teil (31) des Kupplungsmechanismus (3) ein auf der Welle (6) oder dem Wellenabschnitt (6A, 6B) zwischen einer an die feste Klauenkupplung (7) angenäherten Position, die dem eingekuppelten Zustand des Kupplungsmechanismus (3) entspricht, und einer von der festen Klauenkupplung (7) beabstandeten Position, die dem ausgekuppelten Zustand des Kupplungsmechanismus (3) entspricht, axial bewegliches Teil ist.

5. Getriebekasten (1) nach einem der Ansprüche 2 bis 4, **dadurch gekennzeichnet, dass** das bewegliche Teil (31) des Kupplungsmechanismus (3) ein permanent von der Bremse (8) mit permanenter Aktion auf die Winkelgeschwindigkeit des beweglichen Teils (31) gebremstes Teil ist.

6. Getriebekasten (1) nach einem der Ansprüche 4 oder 5, **dadurch gekennzeichnet, dass** das bewegliche Teil (31) des Kupplungsmechanismus (3) eine ausgehöhlte Platte (31) ist und dass die Platte (31) und die feste Klauenkupplung (7) jeweils mit Zähnen (9) für eine feste rotatorische Verbindung der Platte (31) und der festen Klauenkupplung (7) im angenäherten Zustand der Platte (31) an die feste Klauenkupplung (7) ausgerüstet sind.

7. Getriebekasten (1) nach Anspruch 4 oder nach einem der Ansprüche 5 oder 6 in Kombination mit Anspruch 4, **dadurch gekennzeichnet, dass** das bewegliche Teil (31) des Kupplungsmechanismus (3) eine mit Rampen (10) ausgerüstete Platte (31) ist, die dazu ausgelegt sind, durch Stützkontakt mit komplementären Rampen (11), die auf dem Rotationsmotororgan (5) eingerichtet sind, für eine axiale Verlagerung der Platte in Richtung einer Annäherung oder einer Beabstandung der festen Klauenkupplung (7) zusammenzuwirken, die mit der Welle (6) oder dem Wellenabschnitt (6A, 6B), der dem Kupplungsmechanismus (3) zugeordnet ist, rotatorisch fest verbunden ist.

8. Getriebekasten (1) nach vorangehendem Anspruch, **dadurch gekennzeichnet, dass** die Rampen (10) der Platte (31) und (11) des Rotationsmotororgans (5) jeweils in einer ersten und in einer zweiten Rampenreihe organisiert sind, mit den Rampen (10A, 11A) von einer der Reihen aktiv im Vorwärtsgang und den Rampen (10B, 11B) der anderen Reihe aktiv im Rückwärtsgang, wobei diese Rampen jeder Rampenreihe eine Vielzahl von Rampenanordnungen (10A1, 10A2; 10B1, 10B2; 11A1, 11A2; 11B1, 11B2) umfassen, wobei jede Rampenanordnung (11A1, 11A2) oder (11B1, 11B2) einer Rampenreihe (11A) oder (11B) des Rotationsmotororgans (5) mindestens zwei Rampen (11A1, 11A2) oder (11B1, 11B2) umfasst, wobei diese Rampen des Rotationsmotororgans (5) zusammenwirken, eine (11A1) mit einer (10A1) der Rampen (10A1, 10A2) einer Rampenanordnung einer Rampenreihe der Platte (31) für eine axiale Verlagerung axial der Platte (31) in Richtung einer Annäherung der festen Klauenkupplung (7), was der eingekuppelten Position entspricht, die andere (11A2) mit der anderen (10A2) der Rampen der Rampenanordnung einer Rampenreihe der Platte (31) für eine axialen Verlagerung der Platte (31) in Richtung einer Beabstandung der festen Klauenkupplung (7), was der ausgekuppelten Position entspricht.

9. Getriebekasten (1) nach vorangehendem Anspruch, **dadurch gekennzeichnet, dass** die Rampen (10A1, 10A2) einer Rampenanordnung der ersten Rampenreihe der Platte (31) mit den Rampen (10B1, 10B2) einer Rampenanordnung der zweiten Rampenreihe der Platte (31) eine Raute bilden, wobei diese Rampen (10A1, 10A2, 10B1, 10B2) vorzugsweise schraubenförmige Rampen mit einem identischen Schraubengang sind.

10. Getriebekasten (1) nach einem der Ansprüche 2 bis 9, **dadurch gekennzeichnet, dass** das bewegliche Teil (31) des oder eines der Kupplungsmechanismen (3) und des Rotationsmotororgans (5) für den Rotationsantrieb des beweglichen Teils (31) durch das Rotationsmotororgan (5) jeweils mit Zähnen (12) versehen sind, wobei jeder Zahn (12) des beweglichen Teils (31) mit Spiel im Raum zwischen zwei Zähnen (12) des Rotationsmotororgans (5) angebracht ist.

11. Getriebekasten (1) nach Anspruch 1, **dadurch gekennzeichnet, dass** der oder jeder Kupplungsmechanismus (4) zwei als beweglich bezeichnete Klauenkupplungen (141, 142) umfasst, die eine (141) im Vorwärtsgang, die andere (142) im Rückwärtsgang, die vom Rotationsmotororgan (5) getragen werden, ein Element (15) der als fest bezeichneten Klauenkupplung, das mit der Welle (6) oder dem Wellenabschnitt (6A, 6B), der den Kupplungsmechanismus (4) trägt, rotatorisch fest verbunden ist und eine Klauenkupplungssteuerung (16), wobei die Klauenkupplungssteuerung (16), die koaxial und rotatorisch frei auf der Welle (6) oder dem Wellenabschnitt (6A, 6B), der sie trägt, angebracht ist, ein permanent von einer Bremse (8) mit permanenter Wirkung auf die Winkelgeschwindigkeit der Klauenkupplungssteuerung (16) gebremstes Teil ist, wobei diese Klauenkupplungssteuerung (16) mit einem Führungsweg (17) der beweglichen Klauenkupplungen (141, 142) ausgestattet ist, um selektiv den Wechsel jeder beweglichen Klauenkupplung (141, 142) aus einem ausgekuppelten Zustand in einen eingekuppelten Zustand im Eingriff mit dem als fest bezeichneten Klauenkupplungselement (15) zu gestatten, wobei der Führungsweg (17) der Klauenkupplungssteuerung (16) derart ausgelegt ist, den Wechsel der im Vorwärtsgang beweglichen Klauenkupplung (141) im eingekuppelten Zustand in den Rotationsantriebszustand des Rotationsmotororgans (5) in der ersten als Vorwärtsgang bezeichneten Rotationsantriebsrichtung zu gestatten, wenn die Rotationsgeschwindigkeit des Rotationsmotororgans (5) höher als die der Welle (6) oder des Wellenabschnitts (6A; 6B) ist, mit dem der Kupplungsmechanismus (4) imstande ist zusammenzuarbeiten, und den Wechsel der im Rückwärtsgang beweglichen Klauenkupplung (142) im eingekuppelten Zustand in den Rotationsantriebszustand des Rotationsmotororgans (5) in der zweiten als Rückwärtsgang bezeichneten Rotationsantriebsrichtung, wenn die Rotationsgeschwindigkeit des Rotationsmotororgans (5) höher als die der Welle (6) oder des Wellenabschnitts (6A; 6B) ist, mit dem der Kupplungsmechanismus (4) imstande ist zusammenzuarbeiten, wobei das feste Klauenkupplungselement (15) einen Entkupplungsnocken der im Vorwärtsgang beweglichen Klauenkupplung (141) im Rotationsantriebszustand im Vorwärtsgang der Welle (6) oder des Wellenabschnitts (6A; 6B), mit dem der Kupplungsmechanismus (4) zusammenwirkt, wenn die Rotationsgeschwindigkeit der Welle (6) oder des Wellenabschnitts (6A; 6B) höher als die Rotationsgeschwindigkeit des Rotationsmotororgans (5) ist, und einen Entkupplungsnocken der im Rückwärtsgang beweglichen Klauenkupplung (142) im Rotationsantriebszustand im Rückwärtsgang der Welle (6) oder des Wellenabschnitts (6A; 6B), mit dem der Kupplungsmechanismus (4) zusammenwirkt, wenn die Rotationsgeschwindigkeit der Welle (6) oder des Wellenabschnitts (6A; 6B) höher als die Rotationsgeschwindigkeit des Rotationsmotororgans (5) ist, bildet.

12. Getriebekasten (1) nach Anspruch 11, **dadurch gekennzeichnet, dass** jede bewegliche Klauenkupplung (141, 142) die Form eines schwenkenden Hebels (1411, 1421), der um eine zur Welle (6) oder zu den Wellenabschnitten (6A; 6B) parallele Achse schwenkend beweglich angebracht ist, für den Wechsel der beweglichen Klauenkupplung (141, 142) aus einem ausgekuppelten Zustand in einen eingekuppelten Zustand oder umgekehrt annimmt.

13. Getriebekasten (1) nach Anspruch 12, **dadurch gekennzeichnet, dass** der schwenkende Hebel (1411, 1421) mit einem Finger (1412, 1422) versehen ist, der entlang dem oder im Inneren des Führungswegs (17) der Klauenkupplungssteuerung (16) angeordnet ist, wobei dieser Finger (1412, 1422) im Stützkontakt mit dem festen Klauenkupplungselement (15) positionierbar ist.

14. Getriebekasten (1) nach einem der Ansprüche 11 bis 13, **dadurch gekennzeichnet, dass** das feste Klauenkupplungselement (15) die Form eines Rings (151) annimmt, der mit der Welle (6) oder dem Wellenabschnitt (6A, 6B), der ihn trägt, rotatorisch fest verbunden angebracht ist, wobei der Ring (151) mit mindestens zwei äußeren radialen Vorsprüngen (152) versehen ist, wobei der eine oder der andere der äußeren radialen Vorsprünge (152) einen Stützanschlag für eine der beweglichen Klauenkupplungen (141, 142) im eingekuppelten Zustand des Kupplungsmechanismus (4) bildet, wobei mindestens ein Teil der äußeren peripheren Oberfläche des Rings (151), der zwischen den äußeren radialen Vorsprüngen (152) eingerichtet ist, dazu ausgelegt ist, den Teil zu bilden, der den Entkupplungsnocken des festen Klauenkupplungselements (15) bildet.

15. Getriebekasten (1) nach einem der Ansprüche 11 bis 13, **dadurch gekennzeichnet, dass** die Klauenkupplungssteuerung (16) die Form eines rotatorischen Teils vom Typ Platte annimmt, das von der Welle (6) oder dem Wellenabschnitt (6A, 6B), der es trägt, durchquert wird, wobei dieses rotatorische Teil mit mindestens einem Durchgangsschlitz versehen ist, der den Führungsweg (17) der Klauenkupplungssteuerung (16) bildet.

16. Selbstfahrendes Fahrzeug (20) mit einem vorzugsweise laufenden Fahrzeugführer wie ein Rasenmäher, umfassend eine primäre Antriebswelle (22), Räder (21) und einen Getriebekasten (1), der zwischen der primären Antriebswelle (22) und den Rädern (21) des Fahrzeugs (20) positionierbar ist, **dadurch gekennzeichnet, dass** der Getriebekasten (1) einem der Ansprüche 1 bis 15 entspricht.

## Claims

1. A transmission gearbox (1) comprising, housed at least partially inside said box (1), a so-called output shaft (6) made as a single piece or as at least two coaxial shaft sections (6A, 6B), a rotary so-called drive member (5) mounted free to rotate on said shaft (6), a drive system (2) for rotationally driving said rotary drive member (5) in a first, so-called forward-running, rotationally driven direction and in a second, so-called reverse-running, rotationally driven direction and, positioned between the shaft (6) or each of the shaft sections (6A, 6B) and the rotary drive member (5), a clutch mechanism (3, 4), the or each clutch mechanism (3, 4) housed inside the transmission gearbox (1) having a disengaged state and an engaged state, the shaft (6) or each shaft section (6A; 6B) being, when the corresponding clutch mechanism (3, 4) is in the disengaged state, free to rotate in either one of its directions of rotation, the or each so-called automatic clutch mechanism (3, 4) being configured so that, when the rotary drive member (5) is rotationally driven in the first so-called forward-running rotationally driven direction, said clutch mechanism passes from the disengaged state to the engaged state when the rotational speed of said rotary drive member (5) is greater than that of the shaft (6) or of said shaft section (6A; 6B) with which the clutch mechanism (3, 4) is intended to collaborate, and from the engaged state to the disengaged state by the forward-running rotational driving of the shaft (6) or of the shaft section (6A; 6B) with which the clutch mechanism collaborates, when the rotational speed of the shaft (6) or of said shaft section (6A; 6B) is greater than the rotational speed of the rotary drive member (5), **characterized in that** the or each so-called automatic clutch mechanism (3, 4) is a clutch mechanism (3, 4) with two directions of operation and is further configured so that, when the rotary drive member (5) is rotationally driven in the second so-called reverse-running rotationally driven direction, said clutch mechanism passes from the disengaged state to the engaged state when the rotational speed of said rotary drive member (5) is greater than that of the shaft (6) or of said shaft section (6A; 6B) with which the clutch mechanism (3, 4) is designed to collaborate, and from the engaged state to the disengaged state by the reverse-running rotational driving of the shaft (6) or of the shaft section (6A; 6B) with which the clutch mechanism (3, 4) collaborates when the rotational speed of the shaft (6) or of said shaft section (6A; 6B) is greater than the rotational speed of the rotary drive member (5).

2. The transmission gearbox (1) according to claim 1, **characterized in that** the or at least one of the clutch mechanisms (3) comprises a moving part (31) able to move on the shaft (6) or the shaft section (6A; 6B) between a disengaged position and an engaged position, said part (31) that can be rotationally driven by the rotary drive member (5) being configured to pass from the engaged position corresponding to the engaged state of the clutch mechanism (3) to the disengaged position corresponding to the disengaged state of the clutch mechanism (3) through bearing contact with the rotary drive member (5).

3. The transmission gearbox (1) according to the preceding claim, **characterized in that** the moving part (31) of the clutch mechanism (3) is configured to pass from the disengaged position to the engaged position through bearing contact with the rotary drive member (5).

4. The transmission gearbox (1) according to one of claims 2 or 3, **characterized in that** the moving part (31) of the clutch mechanism (3) is a part positioned between a part (7) referred to as the fixed dog gear (7) mounted secured in rotation with the shaft (6) or the shaft section (6A, 6B) associated with the clutch mechanism (3), and a part of the rotary drive member (5), this moving part (31) of the clutch mechanism (3) being a moving part able to move axially on said shaft (6) or said shaft section (6A, 6B) between a position close to said fixed dog gear (7), corresponding to the engaged state of the clutch mechanism (3), and a position separated from the fixed dog gear (7), corresponding to the disengaged state of the clutch mechanism (3).

5. The transmission gearbox (1) according to one of claims 2 to 4, **characterized in that** the moving part (31) of the clutch mechanism (3) is a part that is permanently braked by a brake (8) acting permanently on the angular speed of said moving part (31).

6. The transmission gearbox (1) according to one of claims 4 or 5, **characterized in that** the moving part (31) of the clutch mechanism (3) is a holed plate (31) and **in that** the plate (31) and the fixed dog gear (7) are respectively equipped with teeth (9) for rotationally coupling the plate (31) and the fixed dog gear (7) when the plate (31) is in the state close to the fixed dog gear (7).

7. The transmission gearbox (1) according to claim 4 or one of claims 5 or 6 combined with claim 4, **characterized in that** the moving part (31) of the clutch mechanism (3) is a plate (31) equipped with ramps (10) which are configured to collaborate through bearing contact with complementary ramps (11) formed on the rotary drive member (5) so as to move the plate axially in the direction closer to or away from the fixed dog gear (7) that rotates as one with the shaft (6) or the shaft section (6A, 6B) associated with the clutch mechanism (3).

8. The transmission gearbox (1) according to the preceding claim, **characterized in that** the ramps (10) of the plate (31) and (11) of the rotary drive member (5) are each organized as a first and second series of ramps, with the ramps (10A, 11A) of one of the series active in forward running and the ramps (10B, 11B) of the other series active in reverse running, these ramps of each series of ramps comprising a plurality of sets of ramps (10A1, 10A2; 10B1, 10B2; 11A1, 11A2; 11B1, 11B2), each set of ramps (11A1, 11A2) or (11B1, 11B2) of a series of ramps (11A) or (11B) of the rotary drive member (5) comprising at least two ramps (11A1, 11A2) or (11B1, 11B2), these ramps of the rotary drive member (5) collaborating, in the case of one of them (11A1), with one (10A1) of the ramps (10A1, 10A2) of a set of ramps of a series of ramps of the plate (31) to move the plate (31) axially in the direction closer to the fixed dog gear (7) corresponding to the engaged position, and in the case of the other (11A2) with the other (10A2) of the ramps of said set of ramps of a series of ramps of the plate (31) to move the plate (31) axially in the direction away from the fixed dog gear (7) corresponding to the disengaged position.

9. The transmission gearbox (1) according to the preceding claim, **characterized in that** the ramps (10A1, 10A2) of a set of ramps of the first series of ramps of the plate (31) form, with the ramps (10B1, 10B2) of a set of ramps of the second series of ramps of the plate (31), a diamond shape, these ramps (10A1, 10A2, 10B1, 10B2) preferably being helical ramps with the same helix pitch.

10. The transmission gearbox (1) according to one of claims 2 to 9, **characterized in that** the moving part (31) of the or of one of the clutch mechanisms (3) and the rotary drive member (5) are, for the purpose of rotationally driving the moving part (31) by the rotary drive member (5), each equipped with teeth (12), each tooth (12) of the moving part (31) being mounted with clearance in the space between two teeth (12) of the rotary drive member (5).

11. The transmission gearbox (1) according to claim 1, **characterized in that** the or each clutch mechanism (4) comprises two so-called moving dog gears (141, 142), one of them (141) for forward running and the other (142) for reverse running, these moving dog gears (141, 142) being borne by the rotary drive member (5), a so-called fixed dog clutch element (15) secured in rotation with the shaft (6) or the shaft section (6A, 6B) bearing said clutch mechanism (4) and a dog-clutch controller (16), said dog-clutch controller (16), which is mounted, coaxially and with the freedom to rotate, on the shaft (6) or the shaft section (6A, 6B) that bears it, being a part that is permanently braked by a brake (8) acting permanently on the angular speed of said dog-clutch controller (16), this dog-clutch controller (16) being equipped with a guideway (17) for guiding the moving dog gears (141, 142) so as to allow each moving dog gear (141, 142) to pass selectively from a disengaged state to an engaged state in mesh with the so-called fixed dog clutch element (15), said guideway (17) of the dog-clutch controller (16) being configured to allow the forward-running mobile clutch dog (141) to pass to the engaged state, in the state in which the rotary drive member (5) is rotationally driven in the first, so-called forward-running, rotationally driven direction, when the rotational speed of said rotary drive member (5) is greater than that of the shaft (6) or of said shaft section (6A; 6B) with which the clutch mechanism (4) is able to collaborate, and to allow the reverse-running mobile clutch dog (142) to pass into the engaged state, in the state in which the rotary drive member (5) is rotationally driven in the second, so-called reverse-running, rotationally driven direction, when the rotational speed of said rotary drive member (5) is greater than that of the shaft (6) or of said shaft section (6A; 6B) with which the clutch mechanism (4) is designed to collaborate, the fixed dog clutch element (15) forming a de-clutching cam for disengaging the forward-running mobile clutch dog (141) in the state in which the shaft (6) or the shaft section (6A; 6B) with which the clutch mechanism (4) collaborates is rotationally driven in forward running when the rotational speed of the shaft (6) or of said shaft section (6A; 6B) is greater than the rotational speed of the rotary drive member (5), and a declutching cam for disengaging the reverse-running mobile clutch dog (142) in the state in which the shaft (6) or the shaft section (6A; 6B) with which the clutch mechanism (4) collaborates is rotationally driven in reverse running when the rotational speed of the shaft (6) or of said shaft section (6A; 6B) is greater than the rotational speed of the rotary drive member (5).

12. The transmission gearbox (1) according to claim 11, **characterized in that** each moving clutch dog (141, 142) adopts the form of a pivoting lever (1411, 1421) mounted with the ability to pivot about an axis parallel to the shaft (6) or to the shaft sections (6A; 6B) in order for said moving clutch dog (141, 142) to pass from a disengaged state to an engaged state or vice versa.

13. The transmission gearbox (1) according to claim 12, **characterized in that** said pivoting lever (1411, 1421) is provided with a stud (1412, 1422) positioned along or inside the guideway (17) of the dog-clutch controller (16), this stud (1412, 1422) being able to be positioned in bearing contact with the fixed dog clutch element (15).

14. The transmission gearbox (1) according to one of claims 11 to 13, **characterized in that** the fixed dog clutch element (15) adopts the form of a ring (151) mounted secured in rotation with the shaft (6) or the shaft section (6A, 6B) which bears it, said ring (151) being equipped with at least two external radial projections (152), one or the other of said external radial projections (152) forming an abutment against which one of the moving clutch dogs (141, 142) can bear when the clutch mechanism (4) is in the engaged state, at least part of the external peripheral surface of the ring (151), which surface is created between said external radial projections (152), being configured to form the declutching cam part of said fixed dog clutch element (15).

15. The transmission gearbox (1) according to one of claims 11 to 13, **characterized in that** the dog-clutch controller (16) adopts the form of a rotary part of the plate type through which the shaft (6) or the shaft section (6A, 6B) that bears it passes, this rotary part being equipped with at least one through slot forming the guideway (17) of said dog clutch controller (16).

16. A self-propelled wheeled vehicle (20) with an operator, such as a lawnmower, comprising, a primary drive shaft (22), wheels (21) and a transmission gearbox (1) that can be positioned between the primary drive shaft (22) and the wheels (21) of said vehicle (20), **characterized in that** the transmission gearbox (1) is according to one of claims 1 to 15.
